(19) **Europäisches Patentamt**
**European Patent Office**
**Office européen des brevets**

(11) **EP 3 334 110 A1**

(12) **EUROPEAN PATENT APPLICATION**
published in accordance with Art. 153(4) EPC

(43) Date of publication:
**13.06.2018 Bulletin 2018/24**

(51) Int Cl.:
***H04L 25/08*** *(2006.01)*

(21) Application number: **15904351.2**

(86) International application number:
**PCT/CN2015/090315**

(22) Date of filing: **22.09.2015**

(87) International publication number:
**WO 2017/049464 (30.03.2017 Gazette 2017/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Huawei Technologies Co., Ltd.**
**Longgang District**
**Shenzhen, Guangdong 518129 (CN)**

(72) Inventor: **WANG, Hao**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

(54) **SIGNAL DEMODULATION METHOD AND TERMINAL**

(57) Embodiments of the present invention provide a signal demodulation method and a terminal, and relate to the field of communications technologies, so as to improve estimation accuracy of an existing SLIC demodulation mechanism and improve demodulation performance. A specific solution is as follows: A terminal obtains, according to a received signal and a channel parameter, a probability set corresponding to an unknown demodulation parameter of each layer of a second transmit signal, where a transmit signal corresponding to the received signal includes a first transmit signal sent by a serving cell and the second transmit signal sent by an interference cell, and the probability set includes a probability corresponding to each of multiple values in a preset value set of the unknown demodulation parameter of each layer of the second transmit signal; calculates at least one of an average value of each layer of the second transmit signal, a variance of each layer of the second transmit signal, or a variance of each layer of a second equivalent transmit signal according to the probability set corresponding to the unknown demodulation parameter of each layer of the second transmit signal; and calculates an LLR corresponding to each layer of the transmit signal, and obtains the first transmit signal by means of decoding. The embodiments of the present invention are used for signal demodulation.

A terminal obtains, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal — 101

The terminal calculates at least one of an average value of each layer of the second transmit signal, a variance of each layer of the second transmit signal, or a variance of each layer of the second equivalent transmit signal according to the probability set corresponding to the unknown demodulation parameter of each layer of the second transmit signal, where the second equivalent transmit signal is a signal obtained after the second transmit signal is precoded — 102

The terminal calculates, according to the at least one of the average value of each layer of the second transmit signal, the variance of each layer of the second transmit signal, or the variance of each layer of the second equivalent transmit signal, a log-likelihood ratio LLR corresponding to each layer of the transmit signal — 103

The terminal performs decoding according to the LLR corresponding to each layer of the first transmit signal in the transmit signal, to obtain the first transmit signal — 104

FIG. 6

**Description**

**TECHNICAL FIELD**

The present invention relates to the field of communications technologies, and in particular, to a signal demodulation method and a terminal.

**BACKGROUND**

In a communications system, continuously increasing communication requirements push a wireless transmission technology to continuously evolve. An air access technology in the 3rd Generation Partnership Project is improved and enhanced in the Long Term Evolution (Long Term Evolution, LTE) project, so as to improve performance of a cell-edge user and increase a cell capacity.

In an LTE communications system, a terminal (User Equipment, UE) may be interfered by a paired subscriber in a cell or by a neighboring cell. The interference greatly reduces performance of the terminal in demodulating a data channel. High density and heterogeneousness of a base station are an evolution direction of an LTE network structure. This causes severer co-channel interference between users and that between cells. Among a plurality of demodulation algorithms, a symbol level interference cancellation (Symbol Level Interference Cancellation, SLTC) demodulation algorithm has a relatively strong co-channel interference cancellation capability and a relatively low implementation complexity. This algorithm can be widely applied to the LTE communications system.

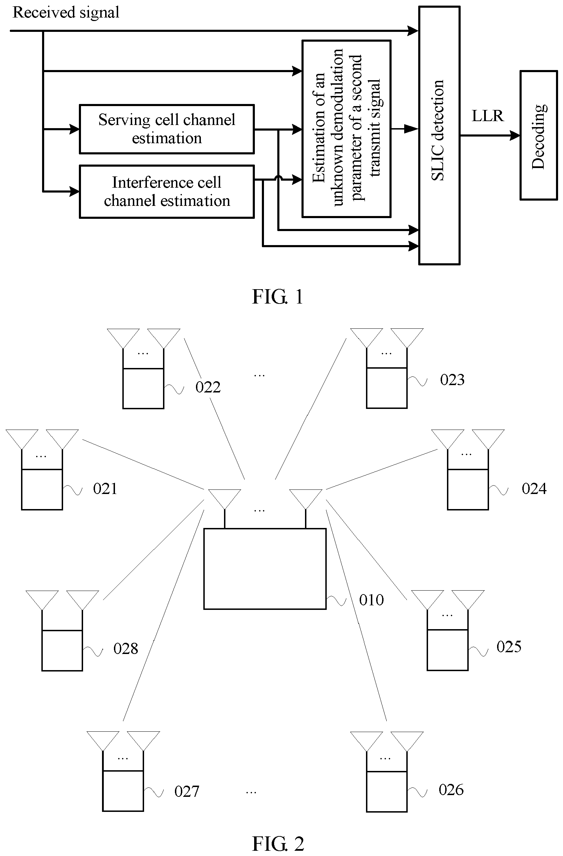

In the prior art, refer to FIG. 1 for a schematic flowchart of a method in which a signal received by a terminal is demodulated by using the SLIC demodulation algorithm. The signal received by the terminal includes at least one layer of a first transmit signal sent by a serving cell and at least one layer of a second transmit signal sent by an interference cell. The terminal estimates channel matrices of the serving cell and the interference cell according to the received signal, estimates demodulation parameters of the second transmit signal such as a modulation order, a transmission mode, a rank, and a precoding matrix indicator (Pre-coder Matrix Indicator, PMI) according to the channel matrices and the received signal by using a classic estimation algorithm, and performs SLIC detection according to the signal received by the terminal, the channel matrices, and the estimated demodulation parameters, to obtain an average value and a variance of each layer of the second transmit signal. Therefore, log-likelihood ratios (Log-Likelihood Ratio, LLR) of the first transmit signal and the second transmit signal are obtained, and decoding is performed according to the LLR of the first transmit signal to obtain a demodulated first transmit signal. The terminal has low accuracy in estimating the demodulation parameters. The accuracy of estimating the demodulation parameters by the terminal is hard to ensure especially when a signal-to-noise ratio is relatively low. Therefore, a capability of the terminal in canceling co-channel interference by using the SLIC demodulation algorithm is greatly affected. Consequently, a frame error rate is relatively high, and demodulation performance of the terminal is reduced.

**SUMMARY**

Embodiments of the present invention provide a signal demodulation method and a terminal, to improve estimation accuracy of an existing SLIC demodulation mechanism and improve demodulation performance.

To achieve the foregoing objective, the following technical solutions are used in the embodiments of the present invention.

According to a first aspect, a terminal is provided, including:

a probability set obtaining circuit, configured to perform a first operation, where the first operation includes: obtaining, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes probabilities respectively corresponding to multiple values in a preset value set of the unknown demodulation parameter of each layer of the second transmit signal;

a symbol level interference cancellation SLIC detection circuit, coupled to the probability set obtaining circuit and configured to perform a second operation, where the second operation includes: calculating at least one of an average value of each layer of the second transmit signal, a variance of each layer of the second transmit signal, or a variance of each layer of a second equivalent transmit signal according to the probability set corresponding to the unknown demodulation parameter of each layer of the second transmit signal, where the second equivalent transmit signal is a signal obtained after the second transmit signal is precoded, and the SLIC is further configured to perform a third operation, and the third operation includes: calculating, according to the at least one of the average value of each layer of the second transmit signal, the variance of each layer of the second transmit signal, or the variance of each layer of the second equivalent transmit signal, a log-likelihood ratio LLR corresponding to each layer of the transmit signal; and

a decoding circuit, coupled to the SLIC detection circuit and configured to perform a fourth operation, where the fourth operation includes: performing decoding according to the LLR corresponding to each layer of the first transmit signal in the transmit signal, to obtain the first transmit signal.

With reference to a first aspect, in a first possible implementation of the first aspect, the unknown demodulation parameter includes at least one of a modulation order, a power ratio of data to pilot, a transmission mode, a rank, or a precoding matrix indicator PMI.

With reference to the first aspect or the first possible implementation of the first aspect, in a second possible implementation of the first aspect, the SLIC detection circuit is further configured to preset a quantity of iteration times before performing the second operation; and

after performing the third operation, the SLIC detection circuit is further configured to:

determine whether the quantity of iteration times is greater than or equal to a preset quantity threshold; and

if the quantity of iteration times is greater than or equal to the preset quantity threshold, end an iteration process, and trigger the decoding circuit to perform the fourth operation; or

if the quantity of iteration times is less than the preset quantity threshold, continue to perform the second operation to enter a next iteration process, and increase the quantity of iteration times by 1.

With reference to any one of the first aspect to the second possible implementation of the first aspect, in a third possible implementation of the first aspect, when the unknown demodulation parameter includes only a first type of unknown demodulation parameter, the SLIC detection circuit performs the second operation to specifically:

calculate the average value of each layer of the second transmit signal and the variance of each layer of the second transmit signal according to a probability set corresponding to the first type of unknown demodulation parameter of each layer of the second transmit signal.

With reference to any one of the first aspect to the second possible implementation of the first aspect, in a fourth possible implementation of the first aspect, when the unknown demodulation parameter includes only a second type of unknown demodulation parameter, the SLIC detection circuit performs the second operation to specifically:

calculate the variance of each layer of the second equivalent transmit signal according to a probability set corresponding to the second type of unknown demodulation parameter of each layer of the second transmit signal.

With reference to any one of the first aspect to the second possible implementation of the first aspect, in a fifth possible implementation of the first aspect, when the unknown demodulation parameter includes a first type of unknown demodulation parameter and a second type of unknown demodulation parameter, the SLIC detection circuit performs the second operation to specifically:

calculate the average value of each layer of the second transmit signal and the variance of each layer of the second transmit signal according to a probability set corresponding to the first type of unknown demodulation parameter of each layer of the second transmit signal, and calculate the variance of each layer of the second equivalent transmit signal according to a probability set corresponding to the second type of unknown demodulation parameter of each layer of the second transmit signal and the variance of each layer of the second transmit signal.

With reference to the third possible implementation of the first aspect or the fifth possible implementation of the first aspect, in a sixth possible implementation of the first aspect, the first type of unknown demodulation parameter includes the modulation order and the power ratio of data to pilot.

With reference to the fourth possible implementation of the first aspect or the fifth possible implementation of the first aspect, in a seventh possible implementation of the first aspect, the second type of unknown demodulation parameter includes the transmission mode, the rank, and the precoding matrix indicator PMI.

With reference to the third possible implementation of the first aspect or the fifth possible implementation of the first aspect, in an eighth possible implementation of the first aspect, for a $j^{th}$ layer of the second transmit signal, where j is a positive integer in an interval of [S+1, L], when performing the second operation, the SLIC detection circuit is configured to calculate an average value of the $j^{th}$ layer of the second transmit signal and a variance of the $j^{th}$ layer of the second transmit signal according to a probability set corresponding to a first type of unknown demodulation parameter of the $j^{th}$ layer of the second transmit signal, and the process includes:

obtaining a first average value of the $j^{th}$ layer of the second transmit signal and a variance of the $j^{th}$ layer of the second transmit signal that are corresponding to each of multiple values in a preset value set of the first type of unknown demodulation parameter of the $j^{th}$ layer of the second transmit signal, to obtain a first average value set and a first variance set; and

calculating the average value of the jth layer of the second transmit signal and the variance of the jth layer of the second transmit signal according to a preset rule, the probability set corresponding to the first type of unknown demodulation parameter of the jth layer of the second transmit signal, the first average value set, and the first variance set.

With reference to the fourth possible implementation of the first aspect or the fifth possible implementation of the first aspect, in a ninth possible implementation of the first aspect, for a jth layer of the second transmit signal, where j is a positive integer in an interval of [S+1, L], when performing the second operation, the SLIC detection circuit is configured to calculate a variance of a jth layer of the second equivalent transmit signal according to a probability set corresponding to a second type of unknown demodulation parameter of the jth layer of the second transmit signal, and the process includes:

obtaining, according to a variance of the jth layer of the second transmit signal, a second variance that is of the jth layer of the second equivalent transmit signal and that is corresponding to each of multiple values in a preset value set of the second type of unknown demodulation parameter of the jth layer of the second transmit signal, to obtain a second variance set; and
calculating the variance of the jth layer of the second equivalent transmit signal according to a preset rule, the probability set corresponding to the second type of unknown demodulation parameter of the jth layer of the second transmit signal, and the second variance set.

With reference to the eighth possible implementation of the first aspect, in a tenth possible implementation of the first aspect, when obtaining the first average value of the jth layer of second transmit signal and the first variance of the jth layer of the second transmit signal that are corresponding to each of the multiple values in the preset value set of the unknown demodulation parameter of the jth layer of the second transmit signal, to obtain the first average value set and the first variance set, the SLIC detection circuit is configured to:
calculate, according to an LLR that is corresponding to the jth layer of the second transmit signal and that is obtained by means of calculation in a previous iteration process, the first average value of the jth layer of the second transmit signal and the first variance of the jth layer of the second transmit signal that are corresponding to each of the multiple values in the preset value set of the first type of unknown demodulation parameter of the jth layer of the second transmit signal, to obtain the first average value set and the first variance set.
With reference to the eighth possible implementation of the first aspect, in an eleventh possible implementation of the first aspect, when calculating the average value of the jth layer of the second transmit signal according to the preset rule, the probability set corresponding to the first type of unknown demodulation parameter of the jth layer of the second transmit signal, and the first average value set, the SLIC detection circuit is configured to:

calculate a weighted average value of multiple elements in the first average value set according to formula 1 and the probability set corresponding to the first type of unknown demodulation parameter of the jth layer of the second transmit signal, to obtain the average value of the jth layer of the second transmit signal, where
formula 1 is represented as follows:

$$E\left(x_j\right) = \sum_{t=1}^{m} E_t p_t ,$$

where
$E(x_j)$ indicates the average value of the jth layer of the second transmit signal, m indicates a quantity of values in the preset value set of the first type of unknown demodulation parameter of the jth layer of the second transmit signal, m is a positive integer, t is a positive integer in an interval of [1, m], $E_t$ indicates an element that is in the first average value set and that is corresponding to a tth value in the preset value set, and $p_t$ indicates an element that is in the probability set and that is corresponding to the tth value in the preset value set.

With reference to the eighth possible implementation of the first aspect, in a twelfth possible implementation of the first aspect, when calculating the variance of the jth layer of the second transmit signal according to the preset rule, the probability set corresponding to the first type of unknown demodulation parameter of the jth layer of the second transmit signal, and the first variance set, the SLIC detection circuit is configured to:

calculate a weighted average value of multiple elements in the first variance set according to formula 2 and the probability set corresponding to the first type of unknown demodulation parameter of the jth layer of the second transmit signal, to obtain the variance of the jth layer of the second transmit signal, where formula 2 is represented as follows:

$$V\left(x_j\right) = \sum_{t=1}^{m} V_t p_t$$,

where
$V(x_j)$ indicates the variance of the jth layer of the second transmit signal, m indicates a quantity of values in the preset value set of the first type of unknown demodulation parameter of the jth layer of the second transmit signal, m is a positive integer, t is a positive integer in an interval of [1, m], $V_t$ indicates an element that is in the first variance set and that is corresponding to a tth value in the preset value set, and $p_t$ indicates an element that is in the probability set and that is corresponding to the tth value in the preset value set.

With reference to the eighth possible implementation of the first aspect, in a thirteenth possible implementation of the first aspect, when calculating the variance of the jth layer of the second transmit signal according to the preset rule, the probability set corresponding to the unknown demodulation parameter of the jth layer of the second transmit signal, and the first variance set, the SLIC detection circuit is configured to:

calculate the variance of the jth layer of the second transmit signal according to the probability set corresponding to the unknown demodulation parameter of the jth layer of the second transmit signal, the first variance set, and formula 3, where
formula 3 is represented as follows:

$$V\left(x_j\right) = \sum_{t=1}^{m} V_t p_t + \sum_{t=1}^{m} p_t E_t^2 - \left(\sum_{t=1}^{m} p_t E_t\right)^2$$
$$= \sum_{t=1}^{m} V_t p_t + \sum_{t=1}^{m} p_t E_t^2 - \left(E\left(x_j\right)\right)^2$$,

where
$v(x_j)$ indicates the variance of the jth layer of the second transmit signal, m indicates a quantity of values in the preset value set of the first type of unknown demodulation parameter of the jth layer of the second transmit signal, m is a positive integer, t is a positive integer in an interval of [1, m], $V_t$ indicates an element that is in the first variance set and that is corresponding to a tth value in the preset value set, $p_t$ indicates an element that is in the probability set and that is corresponding to the tth value in the preset value set, $E_t$ indicates an element that is in the first average value set and that is corresponding to the tth value in the preset value set, and $E(x_j)$ indicates the average value of the jth layer of the second transmit signal.

With reference to the ninth possible implementation of the first aspect, in a fourteenth possible implementation of the first aspect,
when calculating the variance of the jth layer of the second equivalent transmit signal according to the preset rule, the probability set corresponding to the second type of unknown demodulation parameter of the jth layer of the second transmit signal, and the second variance set, the SLIC detection circuit with reference to the first aspect is configured to:

calculate a weighted average value of multiple elements in the second variance set according to formula 4 and the probability set corresponding to the second type of unknown demodulation parameter of the jth layer of the second transmit signal, to obtain the variance of the jth layer of the second transmit signal, where
formula 4 is represented as follows:

$$V\left(X_j\right) = \sum_{w=1}^{n} V_w p_w$$,

where

$V_w$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], $V_w$ indicates an element that is in the first variance set and that is corresponding to a $w^{th}$ value in the preset value set, and $p_w$ indicates an element that is in the probability set and that is corresponding to the $w^{th}$ value in the preset value set. With reference to the ninth possible implementation, in a fifteenth possible implementation of the first aspect, when calculating the variance of the $j^{th}$ layer of the second equivalent transmit signal according to the preset rule, the probability set corresponding to the second type of unknown demodulation parameter of the $j^{th}$ layer of the second transmit signal, and the second variance set, the SLIC detection circuit is configured to:

calculate the variance of the $j^{th}$ layer of the second equivalent transmit signal according to the probability set corresponding to the second type of unknown demodulation parameter of the $j^{th}$ layer of the second transmit signal, the second variance set, and formula 5, where
formula 5 is represented as follows:

$$V\left(X_j\right) = \sum_{w=1}^{n} V_w p_w + \sum_{w=1}^{n} p_w E_w^2 - \left(\sum_{w=1}^{n} p_w E_w\right)^2$$

$$= \sum_{w=1}^{n} V_w p_w + \sum_{w=1}^{n} p_w E_w^2 - \left(E\left(X_j\right)\right)^2 \quad ,$$

where

$V(X_j)$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], $V_w$ indicates an element that is in the second variance set and that is corresponding to a $w^{th}$ value in the preset value set, $p_w$ indicates an element that is in the probability set and that is corresponding to the $w^{th}$ value in the preset value set, $E_t$ indicates a second average value that is of the $j^{th}$ layer of the second equivalent transmit signal and that is corresponding to the $w^{th}$ value in the preset value set, and $E(X_j)$ indicates an average value of the $j^{th}$ layer of the second equivalent transmit signal.

According to a second aspect, a signal demodulation method is provided, including:

step 1: obtaining, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal;
step 2: calculating at least one of an average value of each layer of the second transmit signal, a variance of each layer of the second transmit signal, or a variance of each layer of a second equivalent transmit signal according to the probability set corresponding to the unknown demodulation parameter of each layer of the second transmit signal, where the second equivalent transmit signal is a signal obtained after the second transmit signal is precoded;
step 3: calculating, according to the at least one of the average value of each layer of the second transmit signal, the variance of each layer of the second transmit signal, or the variance of each layer of the second equivalent transmit signal, a log-likelihood ratio LLR corresponding to each layer of the transmit signal; and
step 4: performing decoding according to the LLR corresponding to each layer of the first transmit signal in the transmit signal, to obtain the first transmit signal.

With reference to the second aspect, in a first possible implementation of the second aspect, the unknown demodulation parameter includes at least one of a modulation order, a power ratio of data to pilot, a transmission mode, a rank, or a precoding matrix indicator PMI.
With reference to the second aspect or the first possible implementation of the second aspect, in a second possible implementation of the second aspect, before step 2, the method further includes: presetting a quantity of iteration times; and

after step 3, the method further includes:

determining whether the quantity of iteration times is greater than or equal to a preset quantity threshold; and
if the quantity of iteration times is greater than or equal to the preset quantity threshold, ending an iteration process, and performing step 4; or
if the quantity of iteration times is less than the preset quantity threshold, continuing to perform step 2 to enter a next iteration process, and increasing the quantity of iteration times by 1.

With reference to any one of the second aspect to the second possible implementation of the second aspect, in a third possible implementation of the second aspect, when the unknown demodulation parameter includes only a first type of unknown demodulation parameter, step 2 includes:
calculating the average value of each layer of the second transmit signal and the variance of each layer of the second transmit signal according to a probability set corresponding to the first type of unknown demodulation parameter of each layer of the second transmit signal.

With reference to any one of the second aspect to the second possible implementation of the second aspect, in a fourth possible implementation of the second aspect, when the unknown demodulation parameter includes only a second type of unknown demodulation parameter, step 2 includes:
calculating the variance of each layer of the second equivalent transmit signal according to a probability set corresponding to the second type of unknown demodulation parameter of each layer of the second transmit signal.

With reference to any one of the second aspect to the second possible implementation of the second aspect, in a fifth possible implementation of the second aspect, when the unknown demodulation parameter includes a first type of unknown demodulation parameter and a second type of unknown demodulation parameter, step 2 includes:
calculating the average value of each layer of the second transmit signal and the variance of each layer of the second transmit signal according to a probability set corresponding to the first type of unknown demodulation parameter of each layer of the second transmit signal, and calculating the variance of each layer of the second equivalent transmit signal according to a probability set corresponding to the second type of unknown demodulation parameter of each layer of the second transmit signal and the variance of each layer of the second transmit signal.

With reference to the third possible implementation of the second aspect or the fifth possible implementation of the second aspect, in a sixth possible implementation of the second aspect, the first type of unknown demodulation parameter includes the modulation order and the power ratio of data to pilot.

With reference to the fourth possible implementation of the second aspect or the fifth possible implementation of the second aspect, in a seventh possible implementation of the second aspect, the second type of unknown demodulation parameter includes the transmission mode, the rank, and the precoding matrix indicator PMI.

With reference to the third possible implementation of the second aspect or the fifth possible implementation of the second aspect, in an eighth possible implementation of the second aspect, for a $j^{th}$ layer of the second transmit signal, where j is a positive integer in an interval of [S+1, L], in step 2, calculating an average value of the $j^{th}$ layer of the second transmit signal and a variance of the $j^{th}$ layer of the second transmit signal according to a probability set corresponding to a first type of unknown demodulation parameter of the $j^{th}$ layer of the second transmit signal includes:

obtaining a first average value of the $j^{th}$ layer of the second transmit signal and a variance of the $j^{th}$ layer of the second transmit signal that are corresponding to each of multiple values in a preset value set of the first type of unknown demodulation parameter of the $j^{th}$ layer of the second transmit signal, to obtain a first average value set and a first variance set; and
calculating the average value of the $j^{th}$ layer of the second transmit signal and the variance of the $j^{th}$ layer of the second transmit signal according to a preset rule, the probability set corresponding to the first type of unknown demodulation parameter of the $j^{th}$ layer of the second transmit signal, the first average value set, and the first variance set.

With reference to the fourth possible implementation of the second aspect or the fifth possible implementation of the second aspect, in a ninth possible implementation of the second aspect, for a $j^{th}$ layer of the second transmit signal, where j is a positive integer in an interval of [S+1, L], in step 2, calculating a variance of a $j^{th}$ layer of the second equivalent transmit signal according to a probability set corresponding to a second type of unknown demodulation parameter of the $j^{th}$ layer of the second transmit signal includes:

obtaining, according to a variance of the $j^{th}$ layer of the second transmit signal, a second variance that is of the $j^{th}$ layer of the second equivalent transmit signal and that is corresponding to each of multiple values in a preset value set of the second type of unknown demodulation parameter of the $j^{th}$ layer of the second transmit signal, to obtain a second variance set; and

calculating the variance of the j^th layer of the second equivalent transmit signal according to a preset rule, the probability set corresponding to the second type of unknown demodulation parameter of the j^th layer of the second transmit signal, and the second variance set.

With reference to the eighth possible implementation of the second aspect, in a tenth possible implementation of the second aspect, the obtaining a first average value of the j^th layer of the second transmit signal and a first variance of the j^th layer of the second transmit signal that are corresponding to each of multiple values in a preset value set of the unknown demodulation parameter of the j^th layer of the second transmit signal, to obtain a first average value set and a first variance set includes:

calculating, according to an LLR that is corresponding to the j^th layer of the second transmit signal and that is obtained by means of calculation in a previous iteration process, the first average value of the j^th layer of the second transmit signal and the first variance of the j^th layer of the second transmit signal that are corresponding to each of the multiple values in the preset value set of the first type of unknown demodulation parameter of the j^th layer of the second transmit signal, to obtain the first average value set and the first variance set.

With reference to the eighth possible implementation of the second aspect, in an eleventh possible implementation of the second aspect, the calculating the average value of the j^th layer of the second transmit signal according to a preset rule, the probability set corresponding to the first type of unknown demodulation parameter of the j^th layer of the second transmit signal, and the first average value set includes:

calculating a weighted average value of multiple elements in the first average value set according to formula 1 and the probability set corresponding to the first type of unknown demodulation parameter of the j^th layer of the second transmit signal, to obtain the average value of the j^th layer of the second transmit signal, where
formula 1 is represented as follows:

$$\mathrm{E}\left(x_j\right) = \sum_{t=1}^{m} \mathrm{E}_t p_t \,,$$

where
$\mathrm{E}(x_j)$ indicates the average value of the j^th layer of the second transmit signal, m indicates a quantity of values in the preset value set of the first type of unknown demodulation parameter of the j^th layer of the second transmit signal, m is a positive integer, t is a positive integer in an interval of [1, m], $E_t$ indicates an element that is in the first average value set and that is corresponding to a t^th value in the preset value set, and $p_t$ indicates an element that is in the probability set and that is corresponding to the t^th value in the preset value set.

With reference to the eighth possible implementation of the second aspect, in a twelfth possible implementation of the second aspect, the calculating the variance of the j^th layer of the second transmit signal according to a preset rule, the probability set corresponding to the first type of unknown demodulation parameter of the j^th layer of the second transmit signal, and the first variance set includes:

calculating a weighted average value of multiple elements in the first variance set according to formula 2 and the probability set corresponding to the first type of unknown demodulation parameter of the j^th layer of the second transmit signal, to obtain the variance of the j^th layer of the second transmit signal, where
formula 2 is represented as follows:

$$\mathrm{V}\left(x_j\right) = \sum_{t=1}^{m} \mathrm{V}_t p_t \,,$$

where
$v(x_j)$ indicates the variance of the j^th layer of the second transmit signal, m indicates a quantity of values in the preset value set of the first type of unknown demodulation parameter of the j^th layer of the second transmit signal, m is a positive integer, t is a positive integer in an interval of [1, m], $V_t$ indicates an element that is in the first variance set and that is corresponding to a t^th value in the preset value set, and $p_t$ indicates an element that is in the probability set and that is corresponding to the t^th value in the preset value set.

With reference to the eighth possible implementation of the second aspect, in a thirteenth possible implementation of the second aspect, the calculating the variance of the $j^{th}$ layer of the second transmit signal according to a preset rule, a probability set corresponding to the unknown demodulation parameter of the $j^{th}$ layer of the second transmit signal, and the first variance set includes:

calculating the variance of the $j^{th}$ layer of the second transmit signal according to the probability set corresponding to the unknown demodulation parameter of the $j^{th}$ layer of the second transmit signal, the first variance set, and formula 3, where
formula 3 is represented as follows:

$$V\left(x_j\right)=\sum_{t=1}^{m}V_t p_t+\sum_{t=1}^{m}p_t E_t^2-\left(\sum_{t=1}^{m}p_t E_t\right)^2$$
$$=\sum_{t=1}^{m}V_t p_t+\sum_{t=1}^{m}p_t E_t^2-\left(E\left(x_j\right)\right)^2,$$

where
$v(x_j)$ indicates the variance of the $j^{th}$ layer of the second transmit signal, m indicates a quantity of values in the preset value set of the first type of unknown demodulation parameter of the $j^{th}$ layer of the second transmit signal, m is a positive integer, t is a positive integer in an interval of [1, m], $V_t$ indicates an element that is in the first variance set and that is corresponding to a $t^{th}$ value in the preset value set, $p_t$ indicates an element that is in the probability set and that is corresponding to the $t^{th}$ value in the preset value set, $E_t$ indicates an element that is in the first average value set and that is corresponding to the $t^{th}$ value in the preset value set, and $E(x_j)$ indicates the average value of the $j^{th}$ layer of the second transmit signal.

With reference to the ninth possible implementation of the second aspect, in a fourteenth possible implementation of the second aspect, the calculating the variance of the $j^{th}$ layer of the second equivalent transmit signal according to a preset rule, the probability set corresponding to the second type of unknown demodulation parameter of the $j^{th}$ layer of the second transmit signal, and the second variance set includes:

calculating a weighted average value of multiple elements in the second variance set according to formula 4 and the probability set corresponding to the second type of unknown demodulation parameter of the $j^{th}$ layer of the second transmit signal, to obtain the variance of the $j^{th}$ layer of the second equivalent transmit signal, where
formula 4 is represented as follows:

$$V\left(X_j\right)=\sum_{w=1}^{n}V_w p_w,$$

where
$V(X_j)$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], $V_w$ indicates an element that is in the first variance set and that is corresponding to a $w^{th}$ value in the preset value set, and $p_w$ indicates an element that is in the probability set and that is corresponding to the $w^{th}$ value in the preset value set.

With reference to the ninth possible implementation of the second aspect, in a fifteenth possible implementation of the second aspect, the calculating the variance of the $j^{th}$ layer of the second equivalent transmit signal according to a preset rule, the probability set corresponding to the second type of unknown demodulation parameter of the $j^{th}$ layer of the second transmit signal, and the second variance set includes:

calculating the variance of the $j^{th}$ layer of the second equivalent transmit signal according to the probability set corresponding to the second type of unknown demodulation parameter of the $j^{th}$ layer of the second transmit signal, the second variance set, and formula 5, where
formula 5 is represented as follows:

$$V\left(X_j\right)=\sum_{w=1}^{n}V_w p_w+\sum_{w=1}^{n}p_w E_w^2-\left(\sum_{w=1}^{n}p_w E_w\right)^2$$

$$=\sum_{w=1}^{n}V_w p_w+\sum_{w=1}^{n}p_w E_w^2-\left(E\left(X_j\right)\right)^2 \quad ,$$

where

$V(X_j)$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], $V_w$ indicates an element that is in the second variance set and that is corresponding to a $w^{th}$ value in the preset value set, $p_w$ indicates an element that is in the probability set and that is corresponding to the $w^{th}$ value in the preset value set, $E_t$ indicates a second average value that is of the $j^{th}$ layer of the second equivalent transmit signal and that is corresponding to the $w^{th}$ value in the preset value set, and $E(X_j)$ indicates an average value of the $j^{th}$ layer of the second equivalent transmit signal.

The embodiments of the present invention provide the signal demodulation method and the terminal. The at least one of the average value of each layer of the second transmit signal, the variance of each layer of the second transmit signal, or the variance of each layer of the second equivalent transmit signal is calculated according to the probability corresponding to each of the multiple values in the preset value set of the unknown demodulation parameter of each layer of the second transmit signal sent by the interference cell. The LLR of each layer of the transmit signal is calculated according to the calculated at least one of the average value of each layer of the second transmit signal, the variance of each layer of the second transmit signal, or the variance of each layer of the second equivalent transmit signal. Therefore, the first transmit signal is obtained after the decoding according to the LLR corresponding to each layer of the first transmit signal sent by the serving cell. This is different from the prior art in which the first transmit signal needs to be obtained by means of decoding according to an estimated demodulation parameter. Therefore, estimation accuracy of an existing SLIC demodulation mechanism can be improved, and demodulation performance can be improved.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic flowchart of a signal demodulation method in the prior art;
FIG. 2 is a schematic diagram of a basic architecture of an LTE communications system;
FIG. 3 is a schematic diagram of a resource block according to an embodiment of the present invention;
FIG. 4 is a schematic flowchart of a signal demodulation method according to an embodiment of the present invention;
FIG. 5 is a schematic structural diagram of a terminal according to an embodiment of the present invention;
FIG. 6 is a schematic flowchart of another signal demodulation method according to an embodiment of the present invention;
FIG. 7 is a schematic flowchart of still another signal demodulation method according to an embodiment of the present invention;
FIG. 8 is a schematic flowchart of an improved SLIC detection method according to an embodiment of the present invention;
FIG. 9 is a schematic flowchart of another signal demodulation method according to an embodiment of the present invention; and
FIG. 10A and FIG. 10B are a schematic flowchart of another signal demodulation method according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

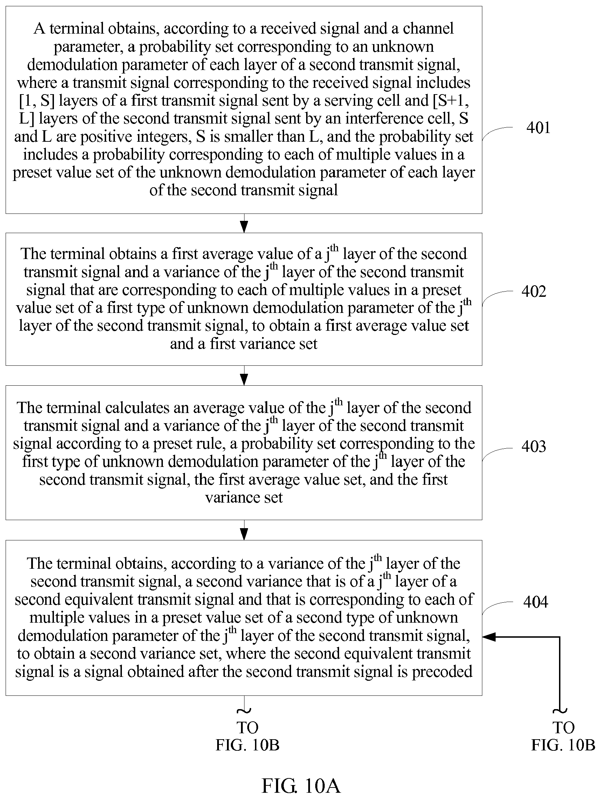

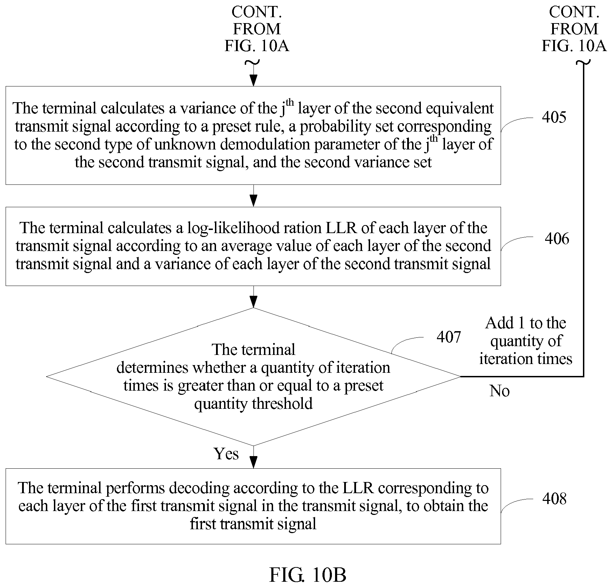

An orthogonal frequency division multiplexing (Orthogonal Frequency Division Multiplexing, OFDM) technology and a multiple-input multiple-output (Multiple-Input Multiple-Output, MIMO) technology are two key technologies of an LTE communications system. Refer to FIG. 2 for a basic network architecture of the LTE communications system in which signal transmission is performed by using the OFDM technology and by using multiple transmit antennas and multiple receive antennas. In FIG. 2, 010 may be a base station (or an access point, or the like), and 021 to 028 may be terminals (or mobile stations, remote stations, user equipments, or the like). The base station 010 and the terminals 021 to 028 may include at least one antenna, and generally multiple antennas. A signal transmitted by each antenna may be corresponding to one layer. The terminal may be user equipment such as a mobile phone, an iPad, or a personal digital assistant.

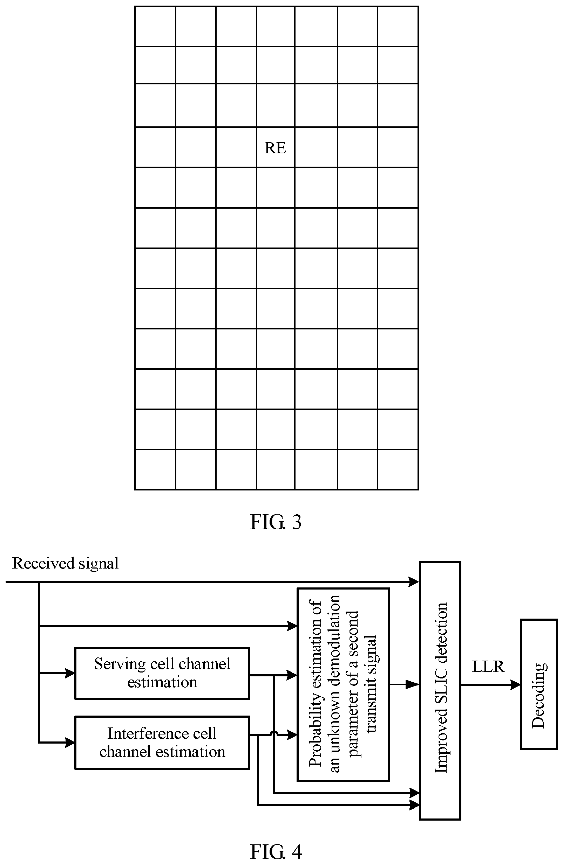

In the basic network architecture shown in FIG. 2, a first transmit signal sent by a serving cell of the serving base station 010 of the terminals 021 to 028 and a second transmit signal sent by an interference cell of another base station may be transmitted to any one of the terminals 021 to 028 by using a resource block and multiple resource elements (Resource Element, RE) included in the resource block shown in FIG. 3. A signal received by the terminal may include multiple resource elements. A signal in any resource element may include the first transmit signal sent by the serving cell and the second transmit signal sent by the interference cell. If the terminal has N (N is a positive integer) receive antennas, an expression of a signal in any resource element may be represented as follows:

$$y = HX + n = HBx + n \quad (1\text{-}1)$$

Herein, $y$ indicates a received signal in a resource element; $X$ indicates an equivalent transmit signal obtained after a transmit signal is precoded; $x = [x_1, ..., x_k, ..., x_L]^T$ indicates L layers of the transmit signal before the precoding and may include a first layer to an $S^{th}$ layer of the first transmit signal sent by the serving cell and an $(S+1)^{th}$ layer to an $L^{th}$ layer of the second transmit signal sent by the interference cell, S and L are positive integers, $x_k$ indicates a $k^{th}$ layer of the transmit signal, and $x_k$ may be specifically a reference signal (Reference Signal, RS) sent by the serving cell or the interference cell, or a data signal sent by the serving cell or the interference cell; $H = [h_1, ..., h_k, ..., h_L]$ indicates a channel matrix, and $h_k$ is an N-dimensional column vector and indicates a channel matrix corresponding to a $k^{th}$ layer of the transmit signal in the L layers of the transmit signal; $B = [b_1, b_k, ..., b_L]$ indicates a precoding matrix, and $b_k$ indicates a precoding vector or a precoding matrix corresponding to the $k^{th}$ layer of the transmit signal in the L layers of the transmit signal; and $n$ indicates an N-dimensional additive white Gaussian noise vector, an average value of $n$ is 0, and a covariance matrix is $\sigma^2 I$.

It should be noted that in the following embodiments, "a transmit signal" indicates a transmit signal before precoding, a precoded transmit signal may be referred to as an equivalent transmit signal, a first precoded transmit signal may be referred to as a first equivalent transmit signal, and a second precoded transmit signal may be referred to as a second equivalent transmit signal.

Description is provided herein by using an example in which an $i^{th}$ layer of the transmit signal$_{xi}$ sent by the serving cell in any resource element is demodulated according to a signal demodulation method procedure shown in FIG. 1. Herein, i is a positive integer in [1, S]. For another layer of the transmit signal, because the first transmit signal is sent by the serving cell, a demodulation parameter of the first layer to the $S^{th}$ layer of the transmit signal of the first transmit signal is agreed on with the serving cell (the base station of the serving cell). Because the $(S+1)^{th}$ layer to the $L^{th}$ layer of the transmit signal is the second transmit signal sent by the interference cell, a demodulation parameter of the $(S+1)^{th}$ layer to the $L^{th}$ layer of the transmit signal is unknown and needs to be obtained by means of estimation by using a classic estimation algorithm. The demodulation parameter may include a modulation order, a power ratio of data to pilot, a transmission mode, a rank, a PMI, and the like that are used to describe a feature of a transmit signal. For example, the modulation order may be used to describe a quantity of bits included in an element of the transmit signal when a modulation scheme such as QPSK, 8PSK, 16QAM, or 64QAM is used, where the element is corresponding to a point in a constellation diagram. The power ratio of data to pilot may be used to describe a power ratio between a data signal and a pilot signal in a resource element. The transmission mode may be used to describe a manner for transmitting a transmit signal, and may include TM1 to TM9. The rank may be used to describe a data layer quantity of a transmit signal that can be received by the terminal from the base station. The PMI may be used to indicate an index of a precoding matrix codebook set. The terminal performs SLIC detection with reference to the received signal, the channel matrix, and the estimated demodulation parameter. The SLIC detection process is actually an iteration process for a preset quantity of times. The iteration process may be specifically as follows:

(1) Cancel soft interference, that is, cancel interference of another layer of the transmit signal other than the $i^{th}$ layer of the transmit signal from the received signal, to obtain an $i^{th}$ layer of the received signal corresponding to the $i^{th}$ layer of the transmit signal, which may be represented as follows:

$$y_i = y - \sum_{k \neq i} h_k \mathrm{E}\left(X_k\right) = y - \sum_{k \neq i} h_k \mathrm{E}\left(b_k x_k\right) = y - \sum_{k \neq i} h_k b_k \mathrm{E}\left(x_k\right) \qquad (1\text{-}2)$$

Herein, $y_i$ indicates the $i^{th}$ layer of the received signal corresponding to the $i^{th}$ layer of the transmit signal, y indicates the received signal, $h_k$ indicates a channel matrix corresponding to the $k^{th}$ layer of the transmit signal and can be obtained by means of channel estimation, $E(X_k)$ indicates an average value of a $k^{th}$ layer of equivalent transmit signal, k is a positive integer in [1, L], and k#i, $E(x_k)$ indicates an average value of the $k^{th}$ layer of the transmit signal, and $b_k$ indicates a precoding vector or a precoding matrix corresponding to the $k^{th}$ layer of transmit signal. In the prior art, the terminal can obtain a precoding matrix B according to the estimated demodulation parameters such as the transmission mode, the rank, and the PMI, so as to obtain $b_k$.

Herein,

$$X_k = b_k x_k \quad (1\text{-}3)$$

In a first iteration process, average values of all layers of the transmit signal may be set to a preset value 0. In a non-first iteration process, if k falls within [1, S], the terminal may calculate the average value $E(x_k)$ of the $k^{th}$ layer of the transmit signal in this iteration process according to an LLR that is of the $k^{th}$ layer of the transmit signal and that is obtained in a previous iteration process and a point in the constellation diagram that is of an agreed modulation scheme corresponding to a modulation order of the $k^{th}$ layer of the transmit signal; or if k falls within [S+1, L], the terminal may calculate the average value $E(x_k)$ of the $k^{th}$ layer of the transmit signal in this iteration process according to an LLR that is of the $k^{th}$ layer of the transmit signal and that is obtained in a previous iteration process and a point in the constellation diagram that is of an estimated modulation scheme corresponding to a modulation order of the $k^{th}$ layer of the transmit signal.

It can be learned from formula (1-2) that when the average value $E(x_k)$ of the $k^{th}$ layer of the transmit signal is obtained, an average value $b_k E(x_k)$ of the $k^{th}$ layer of the equivalent transmit signal may be obtained by means of calculation according to the obtained precoding vector or the obtained precoding matrix $b_k$ corresponding to the $k^{th}$ layer of the transmit signal.

(2) Cancel residual interference, that is, estimate the $i^{th}$ layer of the transmit signal according to an MMSE estimation rule, where an estimated amount of the $i^{th}$ layer of the transmit signal may be represented as follows:

$$\hat{x}_i = w_i^{\mathrm{H}} y_i \qquad (1\text{-}4)$$

Herein,

$$w_i = \left[ HV_i H^{\mathrm{H}} + \sigma^2 I \right]^{-1} h_i \qquad (1\text{-}5)$$

The superscript -1 of the matrix indicates an inverse matrix of the matrix, H indicates a channel matrix, $h_i$ indicates a channel matrix corresponding to the $i^{th}$ layer of the transmit signal, and $V_i$ indicates a variance matrix that needs to be obtained when the $i^{th}$ layer of the transmit signal is demodulated. Herein,

$$V_i = \mathrm{Bdiag}\left(v_1, \ldots, 1, \ldots, v_k, \ldots, v_L\right) B^* \qquad (1\text{-}6\mathrm{a})$$

Herein, $v_k = V(x_k x_k^*)$ indicates a variance of the $k^{th}$ layer of the transmit signal, and a variance $v_i$ of the $i^{th}$ layer of the transmit signal is 1. In the prior art, $v_k$, B, and B* may be obtained by means of calculation according to the estimated demodulation parameter of the second transmit signal, so as to obtain $V_i$ by means of calculation.

In addition, because the $k^{th}$ layer of the equivalent transmit signal is $b_k x_k$, the variance $\tilde{V}_k$ of the $k^{th}$ layer of the equivalent transmit signal may be represented as follows:

$$\tilde{V}_k = V(\boldsymbol{b}_k x_k x_k^* \boldsymbol{b}_k^*) \qquad (1\text{-}7a)$$

$V_i$ may be represented as follows:

$$V_i = \sum_k \tilde{V}_k = \sum_k V(\boldsymbol{b}_k x_k x_k^* \boldsymbol{b}_k^*) \qquad (1\text{-}6b)$$

When B may be determined according to the estimated demodulation parameter of the second transmit signal to determine $\boldsymbol{b}_k$, $\tilde{V}_k$ may be further represented as follows:

$$\hat{V}_k = \boldsymbol{b}_k V(x_k x_k^*) \boldsymbol{b}_k^* \qquad 1\text{-}7b)$$

$V_i$ may be represented as follows:

$$V_i = \sum_k V(\boldsymbol{b}_k x_k x_k^* \boldsymbol{b}_k^*) = \sum_k \boldsymbol{b}_k v_k \boldsymbol{b}_k^* \qquad (1\text{-}6c)$$

It can be learned from formula (1-7b) that when the variance $v_k$ of the $k^{th}$ layer of the transmit signal is obtained, a variance of the $k^{th}$ layer of the equivalent transmit signal may be obtained by means of calculation according to the obtained precoding vector or the obtained precoding matrix $b_k$ corresponding to the $k^{th}$ layer of the transmit signal. In the first iteration process, variances of all layers of the transmit signal may be set to a preset value 1. In the non-first iteration process, if k falls within [1, S], the terminal may calculate the variance $v_k$ of the $k^{th}$ layer of the transmit signal in this iteration process according to the LLR that is of the $k^{th}$ layer of the transmit signal and that is obtained in the previous iteration process and a point in the constellation diagram that is of an agreed modulation scheme corresponding to the modulation order of the $k^{th}$ layer of the transmit signal; or if k falls within [S+1, L], the terminal may calculate the variance $v_k$ of the $k^{th}$ layer of the transmit signal in this iteration process according to the LLR that is of the $k^{th}$ layer of the transmit signal and that is obtained in the previous iteration process and a point in the constellation diagram that is of an estimated modulation scheme corresponding to the modulation order of the $k^{th}$ layer of the transmit signal.

Further, the estimated amount of the $i^{th}$ layer of transmit signal may be modeled as follows:

$$\hat{x}_i = \phi_i x_i + \xi_i \qquad (1\text{-}8)$$

Herein,

$$\phi_i = \boldsymbol{w}_i^{H} \boldsymbol{h}_i \boldsymbol{p}_i \qquad (1\text{-}9)$$

The superscript H represents a conjugate transposed matrix, $x_i$ represents a value of a point in the constellation diagram that is corresponding to the $i^{th}$ layer of the transmit signal, $\xi_i$ indicates a random variable of Gaussian distribution, an average value is 0, and a variance is as follows:

$$V\left(\xi_i\right) = E\left(\left|\xi_i\right|^2\right) - \left(E\left(\xi_i\right)\right)^2$$
$$= w_i^{\mathrm{H}} E\left(y_i y_i^{\mathrm{H}}\right) w_i - \phi_i^2$$
$$= \phi_i - \phi_i^2 \qquad\qquad (1\text{-}10)$$

The log-likelihood ratio LLR of the $i^{th}$ layer of the transmit signal may be calculated according to formula (1-8), formula (1-9), and formula (1-10), and an expression of the LLR may be represented as follows:

$$\lambda_{i,q} \approx \max_{\{x_i\},b_{i,q}=1}\left\{\frac{-\left|\hat{x}_i - \phi_i x_i\right|^2}{\mathrm{Var}\left(\xi_i\right)}\right\} - \max_{\{x_i\},b_{i,q}=0}\left\{\frac{-\left|\hat{x}_i - \phi_i x_i\right|^2}{\mathrm{Var}\left(\xi_i\right)}\right\} \qquad (1\text{-}11)$$

Herein, $\lambda_{i,q}$ represents an LLR of a $q^{th}$ bit of the $i^{th}$ layer of the transmit signal, and is used to describe a possibility that the $q^{th}$ bit of the $i^{th}$ layer of the transmit signal is 0 or 1.

Herein, step (1) and step (2) are described by using an example of calculating an LLR of any layer of the transmit signal (the $i^{th}$ layer of the transmit signal). LLRs respectively corresponding to all layers of the transmit signal may be calculated based on the foregoing step (1) and step (2), including the LLR $\lambda_{k,q}$ corresponding to the $k^{th}$ layer of the transmit signal.

(3) Determine whether a current quantity of iteration times is greater than or equal to a preset quantity threshold; and if the current quantity of iteration times is greater than or equal to the preset quantity threshold, decoding is performed according to LLRs corresponding to all layers of the first transmit signal, to obtain the first transmit signal; or if the current quantity of iteration times is less than the preset quantity threshold, the quantity of iteration times is increased by 1, and step (1) is continuously performed to start a next iteration process, so that LLRs respectively corresponding to all layers of the transmit signal in the next iteration process are calculated according to step (1) and step (2).

In the flowchart of the signal demodulation method shown in FIG. 1, the terminal needs to obtain an average value and a variance of each layer of the second transmit signal according to self-estimated demodulation parameters such as a modulation order, a power ratio of data to pilot, a transmission mode, a rank, and a PMI of the second transmit signal sent by the interference cell, to obtain an LLR of each layer of the transmit signal by means of calculation; and further obtain, by means of decoding, the first transmit signal sent by the serving cell. However, the terminal has relatively low accuracy in estimating the demodulation parameters. Consequently, in the prior art, the terminal has a relatively poor capability in canceling co-channel interference by using the SLIC demodulation algorithm, and a frame error rate is relatively high, thereby reducing demodulation performance of the terminal.

According to the signal demodulation method provided in the following embodiments of the present invention, the terminal can perform SLIC demodulation according to a received signal, a channel matrix, and a probability corresponding to each of multiple values in a preset value set of a demodulation parameter of each layer of a second transmit signal without estimating a demodulation parameter; calculate at least one of an average value of each layer of the second transmit signal, a variance of each layer of the second transmit signal, or a variance of each layer of a second equivalent transmit signal; and obtain an LLR of each layer of a transmit signal by means of calculation according to the at least one of the average value of each layer of the second transmit signal, the variance of each layer of the second transmit signal, or the variance of each layer of the second equivalent transmit signal, to obtain a demodulated first transmit signal by means of decoding. Refer to FIG. 4 for a flowchart of the signal demodulation method provided in the embodiments of the present invention. Description is provided in the following embodiments of the present invention by using an example of demodulating a first transmit signal that is in any resource element and that is sent by a serving cell.

**Embodiment 1**

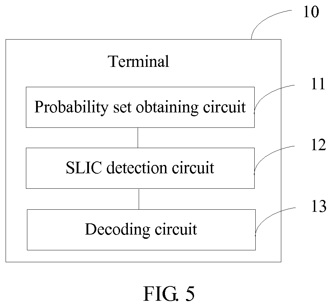

Referring to FIG. 5, this embodiment of the present invention provides a terminal 10, including a probability set obtaining circuit 11, a symbol level interference cancellation SLIC detection circuit 12, and a decoding circuit 13.

The probability set obtaining circuit 11 may be configured to perform a first operation. The first operation includes: obtaining, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference signal, S and L are positive integers, S is smaller than L, and the probability set includes a probability corresponding to each of multiple values in a preset value set of the unknown demodulation parameter of each layer of the second transmit signal.

The signal received by the terminal may include multiple resource elements. Refer to formula (1-1) for an expression of a received signal in any resource element. Herein, $x=[x_1, ..., x_k, ..., x_L]^T$ is a transmit signal corresponding to a received signal y, and X is an equivalent transmit signal corresponding to the received signal y. The channel parameter herein may include a channel matrix corresponding to each layer of the transmit signal. The demodulation parameter may include a modulation order, a power ratio of data to pilot, a transmission mode, a rank, a PMI, and the like. For the terminal, demodulation parameters of a first layer to an $S^{th}$ layer of the first transmit signal sent by the serving cell are agreed by the terminal and the serving cell, and therefore are known. Demodulation parameters of an $(S+1)^{th}$ layer to an $L^{th}$ layer of the second transmit signal sent by the interference cell are unknown and may be obtained by means of estimation in the prior art. It should be noted that the unknown demodulation parameter in this embodiment of the present invention is at least one of demodulation parameters such as a modulation order, a power ratio of data to pilot, a transmission mode, a rank, and a PMI.

The symbol level interference cancellation SLIC detection circuit 12 may be coupled to the probability set obtaining circuit and configured to perform a second operation. The second operation includes: calculating at least one of an average value of each layer of the second transmit signal, a variance of each layer of the second transmit signal, or a variance of each layer of a second equivalent transmit signal according to the probability set corresponding to the unknown demodulation parameter of each layer of the second transmit signal. The second equivalent transmit signal is a signal obtained after the second transmit signal is precoded. The SLIC may be further configured to perform a third operation. The third operation includes: calculating, according to the at least one of the average value of each layer of the second transmit signal, the variance of each layer of the second transmit signal, or the variance of each layer of the second equivalent transmit signal, a log-likelihood ratio LLR corresponding to each layer of the transmit signal.

The decoding circuit 13 may be coupled to the SLIC detection circuit and configured to perform a fourth operation. The fourth operation includes: performing decoding according to the LLR corresponding to each layer of the first transmit signal in the transmit signal, to obtain the first transmit signal.

The terminal 10 herein may be a mobile station, a remote station, or the like that is in a communications network system and that receives a signal from a base station, for example, user equipment such as a mobile phone, an iPad, or a personal digital assistant. The demodulation parameter herein is a parameter that describes a signal feature in the SLIC demodulation process, and may include a modulation order, a power ratio of data to pilot, a transmission mode, a rank, a PMI, and the like. In this embodiment of the present invention, the unknown demodulation parameter may include at least one of a modulation order, a power ratio of data to pilot, a transmission mode, a rank, or a precoding matrix indicator PMI.

It should be noted that for each layer of the second transmit signal, the terminal 10 calculates the at least one of the average value of each layer of the second transmit signal, the variance of each layer of the second transmit signal, or the variance of each layer of the second equivalent transmit signal according to the probability set corresponding to the unknown demodulation parameter of each layer of the second transmit signal; and calculates the LLR corresponding to each layer of the transmit signal according to the at least one of the average value of each layer of the second transmit signal, the variance of each layer of the second transmit signal, or the variance of each layer of the second equivalent transmit signal that is obtained by means of calculation, to obtain the first transmit signal by means of decoding. That is, the terminal 10 can calculate the at least one of the average value of each layer of the second transmit signal, the variance of each layer of the second transmit signal, or the variance of each layer of the second equivalent transmit signal according to the probability set corresponding to the unknown demodulation parameter of each layer of the second transmit signal, to obtain the first transmit signal by means of demodulation without obtaining a specific value of the unknown demodulation parameter of each layer of the second transmit signal by means of estimation. This is different from the prior art in which the average value and the variance of each layer of the second transmit signal need to be calculated according to an estimated demodulation parameter, so as to calculate the LLR of each layer of the transmit signal and then obtain the first transmit signal by means of decoding. Therefore, estimation accuracy of an existing SLIC demodulation mechanism can be improved, co-channel interference can be effectively cancelled, a frame error rate can be reduced, and demodulation performance can be improved.

The foregoing unknown demodulation parameter may include a first type of unknown demodulation parameter and a second type of unknown demodulation parameter. The first type of unknown demodulation parameter may include the modulation order, the power ratio of data to pilot, and the like. The second type of unknown demodulation parameter may include the transmission mode, the rank, the PMI, and the like. Different values of the second type of unknown demodulation parameter affect a precoding matrix B.

When the unknown demodulation parameter includes only the first type of unknown demodulation parameter, the SLIC detection circuit 12 may perform the second operation to specifically:

calculate the average value of each layer of the second transmit signal and the variance of each layer of the second transmit signal according to a probability set corresponding to the first type of unknown demodulation parameter of each layer of the second transmit signal.

When the unknown demodulation parameter includes only the second type of unknown demodulation parameter, the SLIC detection circuit 12 may perform the second operation to specifically:

calculate the variance of each layer of the second equivalent transmit signal according to a probability set corresponding to the second type of unknown demodulation parameter of each layer of the second transmit signal.

When the unknown demodulation parameter includes the first type of unknown demodulation parameter and the second type of unknown demodulation parameter, the SLIC detection circuit 12 may perform the second operation to specifically:

calculate the average value of each layer of the second transmit signal and the variance of each layer of the second transmit signal according to a probability set corresponding to the first type of unknown demodulation parameter of each layer of the second transmit signal, and calculate the variance of each layer of the second equivalent transmit signal according to a probability set corresponding to the second type of unknown demodulation parameter of each layer of the second transmit signal and the variance of each layer of the second transmit signal.

For a $j^{th}$ layer of the second transmit signal, where j is a positive integer in an interval of [S+1, L], when performing the second operation, the SLIC detection circuit 12 is configured to calculate an average value of the $j^{th}$ layer of the second transmit signal and a variance of the $j^{th}$ layer of the second transmit signal according to a probability set corresponding to a first type of unknown demodulation parameter of the $j^{th}$ layer of the second transmit signal. The process may include:

obtaining a first average value of the $j^{th}$ layer of the second transmit signal and a variance of the $j^{th}$ layer of the second transmit signal that are corresponding to each of multiple values in a preset value set of the first type of unknown demodulation parameter of the $j^{th}$ layer of the second transmit signal, to obtain a first average value set and a first variance set; and
calculating the average value of the $j^{th}$ layer of the second transmit signal and the variance of the $j^{th}$ layer of the second transmit signal according to a preset rule, the probability set corresponding to the first type of unknown demodulation parameter of the $j^{th}$ layer of the second transmit signal, the first average value set, and the first variance set.

For a $j^{th}$ layer of the second transmit signal, where j is a positive integer in an interval of [S+1, L], when performing the second operation, the SLIC detection circuit 12 is configured to calculate a variance of a $j^{th}$ layer of the second equivalent transmit signal according to a probability set corresponding to a second type of unknown demodulation parameter of the $j^{th}$ layer of the second transmit signal. The process may include:

obtaining, according to a variance of the $j^{th}$ layer of the second transmit signal, a second variance that is of the $j^{th}$ layer of the second equivalent transmit signal and that is corresponding to each of multiple values in a preset value set of the second type of unknown demodulation parameter of the $j^{th}$ layer of the second transmit signal, to obtain a second variance set; and
calculating the variance of the $j^{th}$ layer of the second equivalent transmit signal according to a preset rule, the probability set corresponding to the second type of unknown demodulation parameter of the $j^{th}$ layer of the second transmit signal, and the second variance set.

Specifically, when obtaining the first average value of the $j^{th}$ layer of the second transmit signal and the first variance of the $j^{th}$ layer of the second transmit signal that are corresponding to each of the multiple values in the preset value set of the unknown demodulation parameter of the $j^{th}$ layer of the second transmit signal, to obtain the first average value set and the first variance set, the SLIC detection circuit 12 may be specifically configured to:

calculate, according to an LLR that is corresponding to the $j^{th}$ layer of the second transmit signal and that is obtained by means of calculation in a previous iteration process, the first average value of the $j^{th}$ layer of the second transmit signal and the first variance of the $j^{th}$ layer of the second transmit signal that are corresponding to each of the multiple values in the preset value set of the first type of unknown demodulation parameter of the $j^{th}$ layer of the second transmit signal, to obtain the first average value set and the first variance set.

Further, when calculating the average value of the $j^{th}$ layer of the second transmit signal according to the preset rule, the probability set corresponding to the first type of unknown demodulation parameter of the $j^{th}$ layer of the second transmit signal, and the first average value set, the SLIC detection circuit 12 may be configured to:

calculate a weighted average value of multiple elements in the first average value set according to formula 1 and the probability set corresponding to the first type of unknown demodulation parameter of the $j^{th}$ layer of the second transmit signal, to obtain the average value of the $j^{th}$ layer of the second transmit signal, where formula 1 is represented as follows:

$$E\left(x_j\right) = \sum_{t=1}^{m} E_t p_t \qquad \text{(formula 1)}$$

Herein, $E(x_j)$ indicates the average value of the $j^{th}$ layer of the second transmit signal, m indicates a quantity of values in the preset value set of the first type of unknown demodulation parameter of the $j^{th}$ layer of the second transmit signal, m is a positive integer, t is a positive integer in an interval of [1, m], $E_t$ indicates an element that is in the first average value set and that is corresponding to a $t^{th}$ value in the preset value set, and $p_t$ indicates an element that is in the probability set and that is corresponding to the $t^{th}$ value in the preset value set.

When calculating the variance of the $j^{th}$ layer of the second transmit signal according to the preset rule, the probability set corresponding to the first type of unknown demodulation parameter of the $j^{th}$ layer of the second transmit signal, and the first variance set, the SLIC detection circuit 12 may be configured to:

calculate a weighted average value of multiple elements in the first variance set according to formula 2 and the probability set corresponding to the first type of unknown demodulation parameter of the $j^{th}$ layer of the second transmit signal, to obtain the variance of the $j^{th}$ layer of second transmit signal, where formula 2 is represented as follows:

$$V\left(x_j\right) = \sum_{t=1}^{m} V_t p_t \qquad \text{(formula 2)}$$

Herein, $V(x_j)$ indicates the variance of the $j^{th}$ layer of the second transmit signal, m indicates a quantity of values in the preset value set of the first type of unknown demodulation parameter of the $j^{th}$ layer of the second transmit signal, m is a positive integer, t is a positive integer in an interval of [1, m], $V_t$ indicates an element that is in the first variance set and that is corresponding to a $t^{th}$ value in the preset value set, and $p_t$ indicates an element that is in the probability set and that is corresponding to the $t^{th}$ value in the preset value set.

When calculating the variance of the $j^{th}$ layer of the second transmit signal according to the preset rule, the probability set corresponding to the unknown demodulation parameter of the $j^{th}$ layer of the second transmit signal, and the first variance set, the SLIC detection circuit 12 may be configured to:

calculate the variance of the $j^{th}$ layer of the second transmit signal according to the probability set corresponding to the unknown demodulation parameter of the $j^{th}$ layer of the second transmit signal, the first variance set, and formula 3, where formula 3 is represented as follows:

$$V\left(x_j\right) = \sum_{t=1}^{m} V_t p_t + \sum_{t=1}^{m} p_t E_t^2 - \left(\sum_{t=1}^{m} p_t E_t\right)^2$$
$$= \sum_{t=1}^{m} V_t p_t + \sum_{t=1}^{m} p_t E_t^2 - \left(E\left(x_j\right)\right)^2 \qquad \text{(formula 3)}$$

Herein, $V(x_j)$ indicates the variance of the $j^{th}$ layer of the second transmit signal, m indicates a quantity of values in the preset value set of the first type of unknown demodulation parameter of the $j^{th}$ layer of the second transmit signal, m is a positive integer, t is a positive integer in an interval of [1, m], $V_t$ indicates an element that is in the first variance set and that is corresponding to a $t^{th}$ value in the preset value set, $p_t$ indicates an element that is in the probability set and that is corresponding to the $t^{th}$ value in the preset value set, $E_t$ indicates an element that is in the first average value set and that is corresponding to the $t^{th}$ value in the preset value set, and $E(x_j)$ indicates the average value of the $j^{th}$ layer of the second transmit signal.

When calculating the variance of the $j^{th}$ layer of the second equivalent transmit signal according to the preset rule, the probability set corresponding to the second type of unknown demodulation parameter of the $j^{th}$ layer of the second transmit signal, and the second variance set, the SLIC detection circuit 12 may be configured to:

> calculate a weighted average value of multiple elements in the second variance set according to formula 4 and the probability set corresponding to the second type of unknown demodulation parameter of the $j^{th}$ layer of the second transmit signal, to obtain the variance of the $j^{th}$ layer of the second transmit signal, where
> formula 4 is represented as follows:

$$\mathrm{V}\left(X_j\right) = \sum_{w=1}^{n} \mathrm{V}_w p_w \qquad \text{(formula 4)}$$

Herein, $\mathrm{V}(X_j)$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], $\mathrm{V}_w$ indicates an element that is in the first variance set and that is corresponding to a $w^{th}$ value in the preset value set, and $p_w$ indicates an element that is in the probability set and that is corresponding to the $w^{th}$ value in the preset value set.

When calculating the variance of the $j^{th}$ layer of the second equivalent transmit signal according to the preset rule, the probability set corresponding to the second type of unknown demodulation parameter of the $j^{th}$ layer of the second transmit signal, and the second variance set, the SLIC detection circuit 12 may be configured to:

> calculate the variance of the $j^{th}$ layer of the second equivalent transmit signal according to the probability set corresponding to the second type of unknown demodulation parameter of the $j^{th}$ layer of the second transmit signal, the second variance set, and formula 5, where
> formula 5 is represented as follows:

$$\mathrm{V}\left(X_j\right) = \sum_{w=1}^{n} \mathrm{V}_w p_w + \sum_{w=1}^{n} p_w \mathrm{E}_w^2 - \left(\sum_{w=1}^{n} p_w \mathrm{E}_w\right)^2$$

$$= \sum_{w=1}^{n} \mathrm{V}_w p_w + \sum_{w=1}^{n} p_w \mathrm{E}_w^2 - \left(\mathrm{E}\left(X_j\right)\right)^2 \qquad \text{(formula 5)}$$

Herein, $\mathrm{V}(X_j)$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], $\mathrm{V}_w$ indicates an element that is in the second variance set and that is corresponding to a $w^{th}$ value in the preset value set, $p_w$ indicates an element that is in the probability set and that is corresponding to the $w^{th}$ value in the preset value set, $\mathrm{E}_t$ indicates a second average value that is of the $j^{th}$ layer of the second equivalent transmit signal and that is corresponding to the $w^{th}$ value in the preset value set, and $\mathrm{E}(X_j)$ indicates an average value of the $j^{th}$ layer of the second equivalent transmit signal.

This embodiment of the present invention provides the terminal. The at least one of the average value of each layer of the second transmit signal, the variance of each layer of the second transmit signal, or the variance of each layer of the second equivalent transmit signal is calculated according to the probability corresponding to each of the multiple values in the preset value set of the unknown demodulation parameter of each layer of the second transmit signal sent by the interference cell. The LLR of each layer of the transmit signal is calculated according to the at least one of the average value of each layer of the second transmit signal, the variance of each layer of the second transmit signal, or the variance of each layer of the second equivalent transmit signal that is obtained by means of calculation. Therefore, the first transmit signal is obtained by means of decoding according to the LLR corresponding to each layer of the first transmit signal sent by the serving cell. This is different from the prior art in which the first transmit signal needs to be obtained by means of decoding according to an estimated demodulation parameter. Therefore, estimation accuracy of an existing SLIC demodulation mechanism can be improved, and demodulation performance can be improved.

**Embodiment 2**

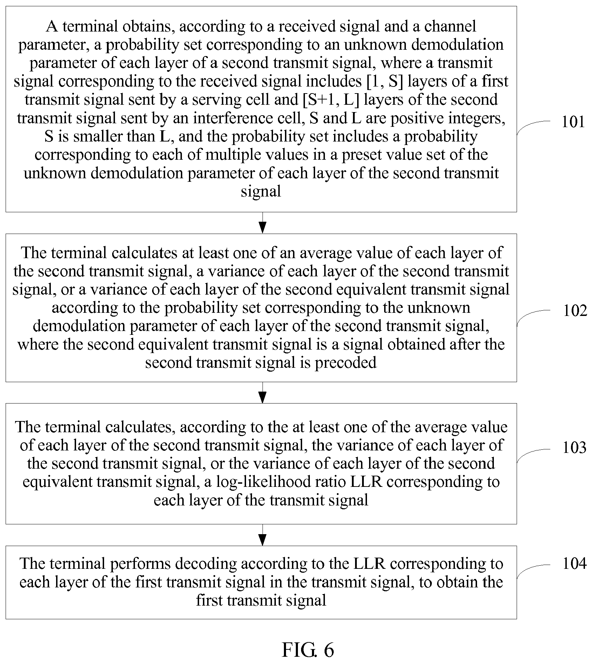

Referring to FIG. 6, this embodiment of the present invention provides a signal demodulation method, including the following steps.

101. A terminal obtains, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal.

The signal received by the terminal may include multiple resource elements. Refer to formula (1-1) for an expression of a received signal in any resource element. The channel parameter herein may include a channel matrix corresponding to each layer of the transmit signal. The demodulation parameter herein is a parameter that describes a signal feature in the SLIC demodulation process, and may include a modulation order, a power ratio of data to pilot, a transmission mode, a rank, a PMI, and the like. For the terminal, demodulation parameters of a first layer to an $S^{th}$ layer of the first transmit signal sent by the serving cell are agreed by the terminal and the serving cell, and therefore are known. Demodulation parameters of an $(S+1)^{th}$ layer to an $L^{th}$ layer of the second transmit signal sent by the interference cell are unknown and may be obtained by means of estimation in the prior art. In the following embodiments of the present invention, the unknown demodulation parameter may include at least one of a modulation order, a power ratio of data to pilot, a transmission mode, a rank, or a PMI.

The terminal may obtain, according to the received signal and the channel parameter, the probability set corresponding to the unknown demodulation parameter of each layer of the second transmit signal.

For example, for any layer of the second transmit signal, that the unknown demodulation parameter is the modulation order is used as an example. If the preset value set of the modulation scheme is {QPSK, 16QAM, 64QAM}, a modulation order corresponding to the QPSK modulation scheme is 2, a modulation order corresponding to the 16QAM modulation scheme is 4, and a modulation order corresponding to the 64QAM modulation scheme is 6, a preset value set of the modulation order is {2, 4, 6}; a probability set corresponding to the modulation order is {$P_{MO=2}$ (a probability obtained when the modulation order is 2), $P_{MO=4}$ (a probability obtained when the modulation order is 4), $P_{MO=6}$ (a probability obtained when the modulation order is 6)}; and the probability set corresponding to the modulation order may be equivalent to {$P_{QPSK}$ (a probability obtained when the modulation scheme is QPSK), $P_{16QAM}$ (a probability obtained when the modulation scheme is 16QAM), $P_{64QAM}$ (a probability obtained when the modulation scheme is 64QAM)}.

For example, for any layer of the second transmit signal, that the unknown demodulation parameter is the rank is used as an example. If a preset value set of the rank is {1, 2}, a probability set corresponding to the rank is {$P_{RI=1}$ (a probability obtained when the rank is 1), $P_{RI=2}$ (a probability obtained when the rank is 2)}.

102. The terminal calculates at least one of an average value of each layer of the second transmit signal, a variance of each layer of the second transmit signal, or a variance of each layer of a second equivalent transmit signal according to the probability set corresponding to the unknown demodulation parameter of each layer of the second transmit signal, where the second equivalent transmit signal is a signal obtained after the second transmit signal is precoded.

The equivalent transmit signal is a signal obtained after the transmit signal is precoded, that is, the equivalent transmit signal is a signal obtained after the transmit signal is multiplied by a precoding matrix. That is, an $(S+1)^{th}$ layer to an $L^{th}$ layer of a signal of X in formula (1-1) may be the second equivalent transmit signal, and a first layer to an $S^{th}$ layer of the signal of X may be a first equivalent transmit signal.

In this step, for each layer of the second transmit signal, the terminal calculates the at least one of the average value of each layer of the second transmit signal, the variance of each layer of the second transmit signal, or the variance of each layer of the second equivalent transmit signal according to the probability set corresponding to the unknown demodulation parameter of each layer of the second transmit signal; and calculates the LLR of each layer of the transmit signal according to the at least one of the average value of each layer of the second transmit signal, the variance of each layer of the second transmit signal, or the variance of each layer of the second equivalent transmit signal that is obtained by means of calculation, to obtain the first transmit signal by means of decoding. That is, the terminal can calculate the at least one of the average value of each layer of the second transmit signal, the variance of each layer of the second transmit signal, or the variance of each layer of the second equivalent transmit signal according to the probability set corresponding to the unknown demodulation parameter of each layer of the second transmit signal, to obtain the first transmit signal by means of demodulation without obtaining a specific value of the unknown demodulation parameter of each layer of the second transmit signal by means of estimation. This is different from the prior art in which the average value and the variance of each layer of the second transmit signal need to be calculated according to an estimated demodulation parameter, so as to calculate the LLR of each layer of the transmit signal and then obtain the first transmit signal by means of decoding. Therefore, estimation accuracy of an existing SLIC demodulation mechanism can be improved, co-channel interference can be effectively cancelled, a frame error rate can be reduced, and demodulation performance can be improved.

The unknown demodulation parameter may include a first type of unknown demodulation parameter and a second type of unknown demodulation parameter. The first type of unknown demodulation parameter may include the modulation order, the power ratio of data to pilot, and the like. The second type of unknown demodulation parameter may include the transmission mode, the rank, the PMI, and the like. Different values of the second type of unknown demodulation parameter affect a precoding matrix B.

Specifically, when the unknown demodulation parameter includes only the first type of unknown demodulation parameter, step 102 may include:

calculating, by the terminal, the average value of each layer of the second transmit signal and the variance of each layer of the second transmit signal according to a probability set corresponding to the first type of unknown demodulation parameter of each layer of the second transmit signal.

When the unknown demodulation parameter includes only the second type of unknown demodulation parameter, step 102 may include:

calculating, by the terminal, the variance of each layer of the second equivalent transmit signal according to a probability set corresponding to the second type of unknown demodulation parameter of each layer of the second transmit signal.

When the unknown demodulation parameter includes the first type of unknown demodulation parameter and the second type of unknown demodulation parameter, step 102 may include:

calculating, by the terminal, the average value of each layer of the second transmit signal and the variance of each layer of the second transmit signal according to a probability set corresponding to the first type of unknown demodulation parameter of each layer of the second transmit signal, and calculating the variance of each layer of the second equivalent transmit signal according to a probability set corresponding to the second type of unknown demodulation parameter of each layer of the second transmit signal and the variance of each layer of the second transmit signal.

In addition, because the demodulation parameter of the first transmit signal is agreed, the terminal may calculate an average value and a variance of each layer of the first transmit signal according to the demodulation parameter of each layer of the first transmit signal. This is consistent with the prior art. In addition, an average value of each layer of the first equivalent transmit signal may be further calculated according to formula (1-3), and a variance of each layer of the first equivalent transmit signal may be further calculated according to formula (1-7b).

103. The terminal calculates, according to the at least one of the average value of each layer of the second transmit signal, the variance of each layer of the second transmit signal, or the variance of each layer of the second equivalent transmit signal, a log-likelihood ratio LLR corresponding to each layer of the transmit signal.

The terminal may perform soft interference cancellation according to the average value of each layer of the second transmit signal, the average value of each layer of the first transmit signal, and formula (1-2); and calculate the LLR corresponding to each layer of the transmit signal according to the variance of each layer of the second transmit signal, the variance of each layer of the first transmit signal, the precoding matrix B, formula (1-4), formula (1-5), formula (1-6a), formula (1-8), formula (1-9), and formula (1-10); or calculate the LLR corresponding to each layer of the transmit signal according to the variance of each layer of the second equivalent transmit signal, the variance of each layer of the first equivalent transmit signal, formula (1-4), formula (1-5), formula (1-6b), formula (1-8), formula (1-9), and formula (1-10). The variance of each layer of the first equivalent transmit signal may be obtained by means of calculation according to the variance of each layer of the first transmit signal and formula (1-7b).

104. The terminal performs decoding according to the LLR corresponding to each layer of the first transmit signal in the transmit signal, to obtain the first transmit signal.

After obtaining the log-likelihood ratio LLR corresponding to each layer of the transmit signal, the terminal may perform decoding according to the LLR corresponding to each layer of the first transmit signal in the transmit signal, to obtain the first transmit signal sent by the serving cell.

This embodiment of the present invention provides the signal demodulation method. The at least one of the average value of each layer of the second transmit signal, the variance of each layer of the second transmit signal, or the variance of each layer of the second equivalent transmit signal is calculated according to the probability corresponding to each of the multiple values in the preset value set of the unknown demodulation parameter of each layer of the second transmit signal sent by the interference cell. The LLR of each layer of the transmit signal is calculated according to the at least one of the average value of each layer of the second transmit signal, the variance of each layer of the second transmit signal, or the variance of each layer of the second equivalent transmit signal that is obtained after the calculation. Therefore, the first transmit signal is obtained by means of decoding according to the LLR corresponding to each layer of the first transmit signal sent by the serving cell. This is different from the prior art in which the first transmit signal needs to be obtained by means of decoding according to an estimated demodulation parameter. Therefore, estimation accuracy of an existing SLIC demodulation mechanism can be improved, and demodulation performance can be improved.

**Embodiment 3**

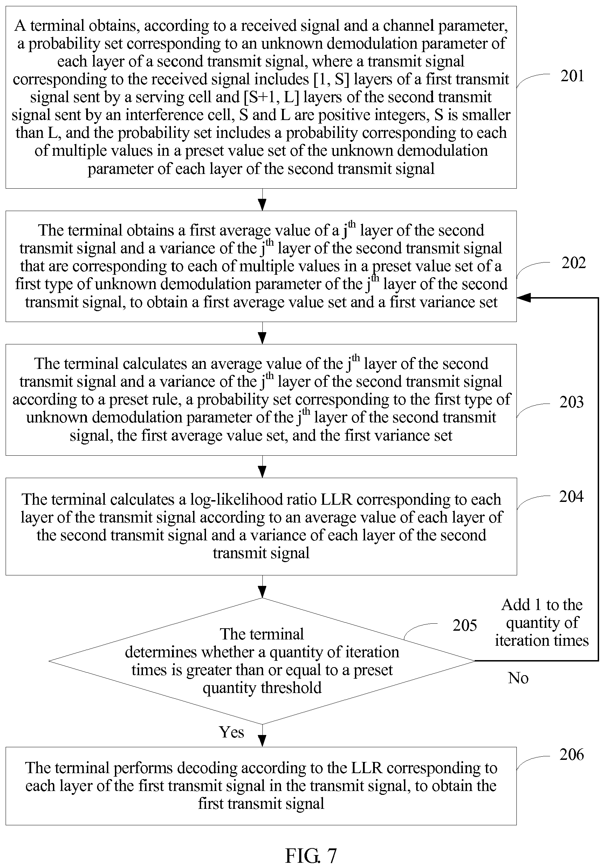

This embodiment of the present invention provides a signal demodulation method. Description is provided by using an example in which an unknown demodulation parameter includes only a modulation order in a first type of unknown demodulation parameter. Referring to FIG. 7, the method may include the following steps.

201. A terminal obtains, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal.

Refer to formula (1-1) for an expression of a received signal in any resource element. For details, refer to the description in step 101. When the unknown demodulation parameter is the modulation order, if a preset value set of a modulation scheme is {QPSK, 16QAM, 64QAM}, a preset value set of the modulation order is {2, 4, 6}, a probability set corresponding to the modulation order is $\{P_{MO=2}, P_{MO=4}, P_{MO=6}\}$, and may be equivalent to a probability set $\{P_{QPSK}, P_{16QAM}, P_{64QAM}\}$. The terminal may obtain, according to the received signal and the channel parameter, a probability corresponding to a value of any modulation order of each layer of the second transmit signal, that is, a probability corresponding to any modulation scheme, to obtain the probability set.

For example, the terminal may calculate a probability $P_{QPSK}$ of the QPSK by using an improved generalized log maximum likelihood algorithm. Herein, $P_{QPSK}$ may be a likelihood probability. An expression of calculating a non-normalized likelihood probability of the QPSK by using the improved generalized log maximum likelihood algorithm may be as follows:

$$\sum_{\{RE\}} \frac{1}{4} \sum_{\{x_j\}} \exp\left( -\frac{\left| \hat{x}_j - \phi x_j \right|^2}{\mathrm{Var}\left( \xi_j \right)} \right) \qquad (1\text{-}12)$$

Herein, $x_j$ indicates a specific value of a point in the constellation diagram that is corresponding to the QPSK, j is a positive integer in an interval of [S+1, L], $\sum_{\{x_j\}}$ indicates summation within a value set corresponding to four points in the constellation diagram that are corresponding to the QPSK, and $\sum_{\{RE\}}$ indicates summation within a range of all resource elements REs that are in a current resource block and that do not include a reference signal RS.

That is, the non-normalized likelihood probability of the QPSK is obtained by first calculating a likelihood function average value corresponding to values of the four points in the QPSK constellation diagram and then performing summation in the range of all REs that are in the resource block and that do not include the reference signal RS. After the non-normalized likelihood probability of the QPSK is obtained, the non-normalized likelihood probability of the QPSK is divided by a sum of non-normalized likelihood probabilities of the QPSK, the 16QAM, and the 64QAM, to obtain a normalized likelihood probability of the QPSK.

It should be noted that the method for calculating the probability $P_{QPSK}$ of the QPSK by using the improved generalized log maximum likelihood algorithm is only an example for description. Certainly, another algorithm may also be used to calculate $P_{QPSK}$. This is not limited herein. $P_{16QAM}$ and $P_{64QAM}$ may be further obtained by using a method similar to the method for calculating $P_{QPSK}$, to obtain the probability set $\{P_{QPSK}, P_{16QAM}, P_{64QAM}\}$.

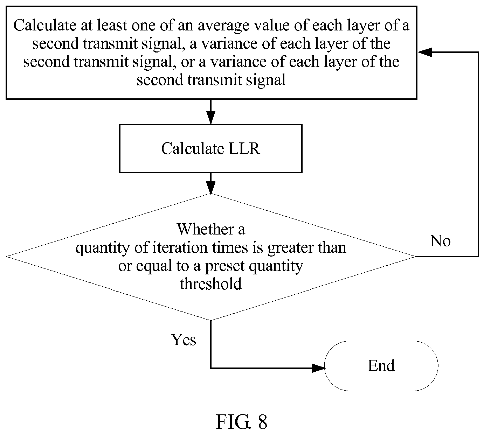

After obtaining the probability set corresponding to the unknown demodulation parameter of each layer of the second transmit signal, the terminal may enter an improved SLIC detection process. Referring to FIG. 8, the improved SLIC detection process is calculating an average value and a variance of each layer of the second transmit signal according to the probability set corresponding to the unknown demodulation parameter of each layer of the second transmit signal by using an iteration process, to calculate a log-likelihood ratio LLR corresponding to each layer of the transmit signal. Any iteration process may include the following steps 202 to 204.

Before entering the improved SLIC detection process, the terminal may further preset a quantity of iteration times, and set an initial value. For example, an initial value of the quantity of iteration times may be 0.

202. The terminal obtains a first average value of a $j^{th}$ layer of the second transmit signal and a variance of the $j^{th}$ layer of the second transmit signal that are corresponding to each of multiple values in a preset value set of a first type of unknown demodulation parameter of the $j^{th}$ layer of the second transmit signal, to obtain a first average value set and a first variance set.

Before performing step 202, the terminal may determine, according to the quantity of iteration times, whether the current iteration process is a first iteration process.

If the quantity of iteration times is the initial value, the terminal may determine that the current iteration process is the first iteration process. In the first iteration process, the first average value that is of the $j^{th}$ layer of the second transmit signal and that is corresponding to each of the multiple values in the preset value set of the first type of unknown demodulation parameter of the $j^{th}$ layer of the second transmit signal may be preset to 0, that is, all elements in the first average value set are 0; and the first variance that is of the $j^{th}$ layer of the second transmit signal and that is corresponding to each of the multiple values in the preset value set of the first type of unknown demodulation parameter of the $j^{th}$ layer of the second transmit signal may be preset to 1, that is, all elements in the first variance set are 1.

If the quantity of iteration times is not the initial value, the terminal may determine that the current iteration process is not the first iteration process. In the non-first iteration process, the terminal may obtain the first average value and the first variance that are of the $j^{th}$ layer of the second transmit signal and that are corresponding to each of the multiple values in the preset value set of the modulation order, that is, a first average value $E_{QPSK}$ and a first variance $V_{QPSK}$ that are of the $j^{th}$ layer of the second transmit signal and that are corresponding to the QPSK, a first average value $E_{16QAM}$ and a first variance $V_{16QAM}$ that are of the $j^{th}$ layer of the second transmit signal and that are corresponding to the 16QAM, and a first average value $E_{64QAM}$ and a first variance $V_{64QAM}$ that are of the $j^{th}$ layer of the second transmit signal and that are corresponding to the 64QAM. Therefore, the first average value set $\{E_{QPSK}, E_{16QAM}, E_{64QAM}\}$ and the first variance set $\{V_{QPSK}, V_{16QAM,} V_{64QAM}\}$ may be obtained.

For example, the terminal may obtain the first average value set $\{E_{QPSK}, E_{16QAM}, E_{64QAM}\}$ and the first variance set $\{V_{QPSK}, V_{16QAM}, V_{64QAM}\}$ in the following two manners.

Manner 1:

The terminal calculates $E_{QPSK}$ and $V_{QPSK}$ by using the following expressions:

$$E_{QPSK} = \sum_{\{x_{\mathrm{j}},\mathrm{QPSK}\}} x_{\mathrm{j}} \, \mathrm{P}\left(x_{\mathrm{j}}\right) \qquad (1\text{-}13)$$

$$V_{QPSK} = \sum_{\{x_{\mathrm{j}},\mathrm{QPSK}\}} \left|x_{\mathrm{j}} - E_{QPSK}\right|^{2} \mathrm{P}\left(x_{\mathrm{j}}\right) \qquad (1\text{-}14)$$

$$\mathrm{P}\left(x_{\mathrm{j}}\right) = \frac{1}{\pi \mathrm{V}\left(\xi_{\mathrm{j}}\right)} \exp\left(-\frac{\left|\hat{x}_{\mathrm{j}} - \phi x_{\mathrm{j}}\right|^{2}}{\mathrm{V}\left(\xi_{\mathrm{j}}\right)}\right) \qquad (1\text{-}15)$$

Herein, $x_{\mathrm{j}}$ indicates a specific value of a point in the constellation diagram that is corresponding to the QPSK, $\sum_{\{\overline{x}_{\mathrm{j}},\mathrm{QPSK}\}}$ indicates summation within a value set corresponding to four points in the constellation diagram that are corresponding to the QPSK, $P_{QPSK}$ indicates a probability that the QPSK modulation scheme is applied to the $j^{th}$ layer of the transmit signal, $P_{QPSK}$ is an element in a probability set corresponding to the modulation order, and for description about $V(\xi_{\mathrm{j}})$ in formula (1-15), refer to formula (1-10).

The terminal may further obtain $E_{16QAM}$ and $V_{16QAM}$ by means of calculation by using the following expressions. This is similar to the process of calculating $E_{QPSK}$ and $V_{QPSK.}$

$$E_{16QAM} = \sum_{\{x_{\mathrm{j}},16QAM\}} x_{\mathrm{j}} \, \mathrm{P}\left(x_{\mathrm{j}}\right) \qquad (1\text{-}16)$$

$$V_{16QAM} = \sum_{\{\bar{x}_j,16QAM\}} \left| x_j - E_{16QAM} \right|^2 P(x_j) P_{16QAM}$$

$$(1\text{-}17)$$

$$P(x_j) = \frac{1}{\pi V(\xi_j)} \exp\left( -\frac{\left| \hat{x}_j - \phi x_j \right|^2}{V(\xi_j)} \right)$$

$$(1\text{-}18)$$

Herein, $x_j$ indicates a specific value of a point in the constellation diagram that is corresponding to the 16QAM,

$$\sum_{\{x_j,16QAM\}}$$ indicates summation within a value set corresponding to 16 points in the constellation diagram that are corresponding to the 16QAM, $P_{16QAM}$ indicates a probability that the 16QAM modulation scheme is applied to the $j^{th}$ layer of the transmit signal, $P_{16QAM}$ is an element in a probability set corresponding to the modulation order, and for description about $V(\xi_j)$ in formula (1-15), refer to formula (1-10).

Similarly, the terminal may further obtain $E_{64QAM}$ and $V_{64QAM}$ by means of calculation by using the following expressions:

$$E_{64QAM} = \sum_{\{x_j,64QAM\}} x_j P(x_j)$$

$$(1\text{-}19)$$

$$V_{64QAM} = \sum_{\{x_j,64QAM\}} \left| x_j - E_{64QAM} \right|^2 P(x_j)$$

$$(1\text{-}20)$$

$$P(x_j) = \frac{1}{\pi V(\xi_j)} \exp\left( -\frac{\left| \hat{x}_j - \phi x_j \right|^2}{V(\xi_j)} \right)$$

$$(1\text{-}21)$$

Herein, $x_j$ indicates a specific value of a point in the constellation diagram that is corresponding to the 64QAM,

$$\sum_{\{x_j,64QAM\}}$$ indicates summation within a value set corresponding to 64 points in the constellation diagram that are corresponding to the 64QAM, $P_{64QAM}$ indicates a probability that the 64QAM modulation scheme is applied to the $j^{th}$ layer of the transmit signal, $P_{64QAM}$ is an element in a probability set corresponding to the modulation order, and for description about $V(\xi_j)$ in formula (1-15), refer to formula (1-10).

Manner 2:

The terminal may calculate, according to an LLR that is corresponding to the $j^{th}$ layer of the second transmit signal and that is obtained by means of calculation in a previous iteration process, the first average value of the $j^{th}$ layer of the second transmit signal and the first variance of the $j^{th}$ layer of the second transmit signal that are corresponding to each of the multiple values in the preset value set of the first type of unknown demodulation parameter of the $j^{th}$ layer of the second transmit signal, to obtain the first average value set and the first variance set.

Specifically, the terminal may calculate the first average value set $\{E_{QPSK}, E_{16QAM}, E_{64QAM}\}$ and the first variance set $\{V_{QPSK}, V_{16QAM}, V_{64QAM}\}$ by using a conventional algorithm in an existing SLIC demodulation algorithm according to the LLR that is corresponding to the $j^{th}$ layer of the second transmit signal and that is obtained by means of calculation in the previous iteration process.

For example, an expression for calculating $E_{QPSK}/E_{16QAM}/E_{64QAM}$ by using the conventional algorithm in the existing SLIC demodulation algorithm according to the LLR that is corresponding to the $j^{th}$ layer of the second transmit signal and that is obtained by means of calculation in the previous iteration process may be as follows:

$$E_{QPSK/16QAM/64QAM} = \sum_{\{x_j\}} x_j \prod_q P(t_q) \qquad (1\text{-}22)$$

Herein,

$$P(t_q = 1) = \frac{\exp(\lambda_q)}{1 + \exp(\lambda_q)} \qquad (1\text{-}23)$$

$$P(t_q = 0) = \frac{1}{1 + \exp(\lambda_q)} \qquad (1\text{-}24)$$

$E_{QPSK/16QAM/64QAM}$ indicates calculation performed to obtain $E_{QPSK}$, $E_{16QAM}$, or $E_{64QAM}$; when $E_{QPSK}$ is calculated, $x_j$ indicates a specific value of a point in the constellation diagram that is corresponding to the QPSK, $\sum_{\{x_j\}}$ indicates summation within a value set corresponding to four points in the constellation diagram that are corresponding to the QPSK, $P(t_q = 1)$ indicates a probability obtained when a current bit is 1, $P(t_q=0)$ indicates a probability obtained when a current bit is 0, $\prod_q$ indicates consecutive multiplication performed in a range of q bits corresponding to $x_j$, and when the modulation scheme is the QPSK, q is 2.

Specifically, an expression for obtaining $E_{QPSK}$ according to formula (1-22) and formula (1-23) may be as follows:

$$E_{QPSK} = -\frac{1}{\sqrt{2}} \tanh\left(\frac{\lambda_0}{2}\right) - j\frac{1}{\sqrt{2}} \tanh\left(\frac{\lambda_1}{2}\right) \qquad (1\text{-}25)$$

Herein, $\lambda_0$ indicates an LLR corresponding to a $0^{th}$ bit in two bits corresponding to the QPSK, and $\lambda_1$ indicates an LLR corresponding to a first bit in two bits corresponding to the QPSK.

In addition, an expression for calculating $V_{QPSK}$ by using the conventional algorithm in the existing SLIC demodulation algorithm according to the LLR that is corresponding to the $j^{th}$ layer of the second transmit signal and that is obtained by means of calculation in the previous iteration process may be as follows:

$$V_{QPSK} = 1 - \left| E_{QPSK} \right|^2 = 1 - \left| -\frac{1}{\sqrt{2}} \tanh\left(\frac{\lambda_0}{2}\right) - j\frac{1}{\sqrt{2}} \tanh\left(\frac{\lambda_1}{2}\right) \right|^2 \qquad (1\text{-}26)$$

The method for calculating $E_{16QAM}$, $E_{64QAM}$, $V_{16QAM}$, and $V_{64QAM}$ by using the conventional algorithm in the existing SLIC demodulation algorithm according to the LLR that is corresponding to the $j^{th}$ layer of the second transmit signal and that is obtained by means of calculation in the previous iteration process is similar to the process of calculating $E_{QPSK}$ and $V_{QPSK}$. Details are not described herein again.

It can be learned by comparing manner 1 with manner 2 that the first average value and the first variance of the $j^{th}$ layer of the second transmit signal that are corresponding to each of three modulation schemes may be obtained in manner 2 based on the LLR and by using the conventional algorithm in the prior art; but in manner 1, the existing conventional algorithm in the prior art cannot be used, and four values, 16 values, and 64 values respectively corresponding to the three modulation schemes need to be weighed, to obtain the first average value and the first variance that are of the $j^{th}$ layer of the second transmit signal and that are corresponding to each of the three modulation schemes. Therefore, manner 1 has a relatively complex calculation process and a large calculation volume.

203. The terminal calculates an average value of the $j^{th}$ layer of the second transmit signal and a variance of the $j^{th}$ layer of the second transmit signal according to a preset rule, a probability set corresponding to the first type of unknown demodulation parameter of the $j^{th}$ layer of the second transmit signal, the first average value set, and the first variance set.

After obtaining, according to the first average value set and the first variance set of the $j^{th}$ layer of the second transmit signal, the first average value and the first variance that are of the $j^{th}$ layer of the second transmit signal and that are corresponding to each of the multiple values in the preset value set of the modulation order in step 202, the terminal may calculate the average value and the variance of the $j^{th}$ layer of the second transmit signal according to the preset rule, and the first average value set and the first variance set of the $j^{th}$ layer of the second transmit signal.

Optionally, the terminal may calculate a weighted average value of multiple elements in the first average value set according to formula 1 and the probability set corresponding to the first type of unknown demodulation parameter of the $j^{th}$ layer of the second transmit signal, to obtain the average value of the $j^{th}$ layer of the second transmit signal. Formula 1 may be represented as follows:

$$\mathrm{E}\left(x_j\right) = \sum_{t=1}^{m} \mathrm{E}_t p_t \qquad \text{(formula 1)}$$

Herein, $\mathrm{E}(x_j)$ indicates the average value of the $j^{th}$ layer of the second transmit signal, m indicates a quantity of values in the preset value set of the first type of unknown demodulation parameter of the $j^{th}$ layer of the second transmit signal, m is a positive integer, t is a positive integer in an interval of [1, m], $\mathrm{E}_t$ indicates an element that is in the first average value set and that is corresponding to a $t^{th}$ value in the preset value set, and $p_t$ indicates an element that is in the probability set and that is corresponding to the $t^{th}$ value in the preset value set.

In this embodiment of the present invention, when the unknown demodulation parameter is the modulation order, and the preset value set is {QPSK, 16QAM, 64QAM}, m is 3, $\mathrm{E}_t$ indicates an element in the first average value set: $E_{QPSK}$, $E_{16QAM}$, or $E_{64QAM}$, and $p_t$ indicates $\mathrm{P}_{QPSK}$, $\mathrm{P}_{16QAM}$, or $\mathrm{P}_{64QAM}$ in the probability set, that is, the average value $\mathrm{E}(x_j)$ of the $j^{th}$ layer of the second transmit signal may be represented as follows:

$$\mathrm{E}\left(x_j\right) = \mathrm{E}_{QPSK}\, \mathrm{P}_{QPSK} + \mathrm{E}_{16QAM}\, \mathrm{P}_{16QAM} + \mathrm{E}_{64QAM}\, \mathrm{P}_{64QAM} \qquad (1\text{-}27)$$

In the first iteration process, $E_{QPSK}$, $E_{16QAM}$, and $E_{64QAM}$ may be 0. In the non-first iteration process, $E_{QPSK}$, $E_{16QAM}$, and $E_{64QAM}$ may be obtained by means of calculation in manner 2 according to the LLR, or may be obtained by means of calculation in manner 1. When $E_{QPSK}$, $E_{16QAM}$, and $E_{64QAM}$ are obtained by means of calculation in manner 1, the average value $\mathrm{E}(x_j)$ of the $j^{th}$ layer of the second transmit signal may be further represented as follows:

$$\mathrm{E}\left(x_j\right) = \sum_{\{x_j, QPSK, 16QAM, 64QAM\}} x_j\, \mathrm{P}\left(x_j\right) P_{QPSK/16QAM/64QAM} \qquad (1\text{-}28)$$

In the foregoing expression, $\displaystyle\sum_{\{x_j, QPSK, 16QAM, 64QAM\}}$ indicates summation within all 84 (4+16+64) values of points in the constellation diagrams that are corresponding to the three modulation schemes; $x_j$ indicates a specific value of a point in a constellation diagram that is corresponding to a modulation scheme; when $x_j$ is a specific value of a point in the constellation diagram that is corresponding to the QPSK, $P_{QPSK/16QAM/64QAM}$ is $\mathrm{P}_{QPSK}$; when $x_j$ is a specific value of a point in the constellation diagram that is corresponding to the 16QAM, $P_{QPSK/16QAM/64QAM}$ is $\mathrm{P}_{16QAM}$; when $x_j$ is a specific value of a point in the constellation diagram that is corresponding to the 64QAM, $P_{QPSK/16QAM/64QAM}$ is $\mathrm{P}_{64QAM}$; and for $\mathrm{P}(x_j)$, refer to description of formula (1-21).

Optionally, the terminal may calculate a weighted average value of multiple elements in the first variance set according to formula 2 and the probability set corresponding to the first type of unknown demodulation parameter of the $j^{th}$ layer of the second transmit signal, to obtain the variance of the $j^{th}$ layer of the second transmit signal. Formula 2 may be represented as follows:

$$V\left(x_j\right) = \sum_{t=1}^{m} V_t p_t \qquad \text{(formula 2)}$$

Herein, $V(x_j)$ indicates the variance of the $j^{th}$ layer of the second transmit signal, m indicates a quantity of values in the preset value set of the first type of unknown demodulation parameter of the $j^{th}$ layer of the second transmit signal, m is a positive integer, t is a positive integer in an interval of [1, m], $V_t$ indicates an element that is in the first variance set and that is corresponding to a $t^{th}$ value in the preset value set, and $p_t$ indicates an element that is in the probability set and that is corresponding to the $t^{th}$ value in the preset value set.

In this embodiment of the present invention, when the demodulation parameter is the modulation order, and the preset value set is {QPSK, 16QAM, 64QAM}, m is 3, $V_t$ indicates $V_{QPSK}$, $V_{16QAM}$, or $V_{64QAM}$ in the first variance set, and $p_t$ indicates $P_{QPSK}$, $P_{16QAM}$, or $P_{64QAM}$ in the probability set, that is, the variance $V(x_j)$ of the $j^{th}$ layer of the second transmit signal may be represented as follows:

$$V\left(x_j\right) = V_{QPSK}\, P_{QPSK} + V_{16QAM}\, P_{16QAM} + V_{64QAM}\, P_{64QAM} \qquad (1\text{-}29)$$

In the first iteration process, $V_{QPSK}$, $V_{16QAM}$, and $V_{64QAM}$ may be 1. In the non-first iteration process, $V_{QPSK}$, $V_{16QAM}$, and $V_{64QAM}$ may be obtained by means of calculation in manner 2 according to the LLR, or may be obtained by means of calculation in manner 1. When VQPSK, V16QAM, and V64QAM are obtained by means of calculation in manner 1, the variance $V(x_j)$ of the $j^{th}$ layer of the second transmit signal may be further represented as follows:

$$V\left(x_j\right) = \sum_{\{x_j, \text{QPSK}, 16\text{QAM}, 64\text{QAM}\}} \left| x_j - E\left(x_j\right) \right|^2 P\left(x_j\right) P_{QPSK/16QAM/64QAM} \qquad (1\text{-}30)$$

In the foregoing expression, $\sum_{\{x_j, \text{QPSK}, 16\text{QAM}, 64\text{QAM}\}}$ indicates summation within all 84 (4+16+64) values of points in the constellation diagrams that are corresponding to the three modulation schemes; $x_j$ indicates a specific value of a point in a constellation diagram that is corresponding to a modulation scheme; when $x_j$ is a specific value of a point in the constellation diagram that is corresponding to the QPSK, $E(x_j)$ is $E_{QPSK}$, and $P_{QPS/16QAM/64QAM}$ is $P_{QPSK}$; when $w_j$ is a specific value of a point in the constellation diagram that is corresponding to the 16QAM, $E(_j)$ is $E_{16QAM}$, and $P_{QPSK/16QAM/64QAM}$ is $P_{16QAM}$; when $x_j$ is a specific value of a point in the constellation diagram that is corresponding to the 64QAM, $E(x_j)$ is $E_{64QAM}$, and $P_{QPSK/16QAM/64QAM}$ is $P_{64QAM}$; and for $P(x_j)$, refer to description of formula (1-21).

It can be learned that: a process of obtaining the first average value set and the first variance set in manner 1 with reference to formula (1-28) and formula (1-30), to obtain the average value and the variance of the $j^{th}$ layer of the second transmit signal by means of calculation is relatively complex and has a large calculation volume; a process of obtaining the first average value set and the first variance set in manner 2 with reference to formula (1-27) and formula (1-29) is relatively simple and has a small calculation volume.

The method for calculating the average value and the variance of the $j^{th}$ layer of the transmit signal in manner 2 by using formula (1-27) and formula (1-29) is three times more complex than the conventional SLIC demodulation algorithm in the prior art. However, complexity of calculating the average value and the variance occupies a small portion in the SLIC demodulation algorithm. Therefore, overall complexity does not increase much.

Optionally, the terminal may further calculate the variance of the $j^{th}$ layer of the second transmit signal according to the probability set corresponding to the unknown demodulation parameter of the $j^{th}$ layer of the second transmit signal, the first variance set, and formula 3. Formula 3 may be represented as follows:

$$V\left(x_j\right)=\sum_{t=1}^{m} V_t p_t + \sum_{t=1}^{m} p_t E_t^2 - \left(\sum_{t=1}^{m} p_t E_t\right)^2$$

$$= \sum_{t=1}^{m} V_t p_t + \sum_{t=1}^{m} p_t E_t^2 - \left(E\left(x_j\right)\right)^2 \qquad \text{(formula 3)}$$

Herein, $V_t$ indicates the variance of the jth layer of the second transmit signal, m indicates a quantity of values in the preset value set of the first type of unknown demodulation parameter of the jth layer of the second transmit signal, m is a positive integer, t is a positive integer in an interval of [1, m], $V_t$ indicates an element that is in the first variance set and that is corresponding to a tth value in the preset value set, $p_t$ indicates an element that is in the probability set and that is corresponding to the tth value in the preset value set, $E_t$ indicates an element that is in the first average value set and that is corresponding to the tth value in the preset value set, and $E(x_j)$ indicates an average value of the jth layer of the second transmit signal.

In this embodiment of the present invention, when the demodulation parameter is the modulation order, and the preset value set is {QPSK, 16QAM, 64QAM}, m is 3, $V_t$ indicates $V_{QPSK}$, $V_{16QAM}$, and $V_{64QAM}$ in the first variance set, $E_t$ indicates $E_{QPSK}$, $E_{16QAM}$, or $E_{64QAM}$ in the first average set, and $p_t$ indicates $P_{QPSK}$, $P_{16QAM}$, or $P_{64QAM}$. It can be learned from formula (3) that the variance $V(x_j)$ of the jth layer of the second transmit signal may be represented as follows:

$$V\left(x_j\right) = V_{QPSK}\,P_{QPSK} + V_{16QAM}\,P_{16QAM} + V_{64QAM}\,P_{64QAM}$$

$$+ P_{QPSK}\,E_{QPSK}^2 + P_{16QAM}\,E_{16QAM}^2 + P_{64QAM}\,E_{64QAM}^2 - \left(E\left(x_j\right)\right)^2 \qquad (1\text{-}31)$$

In the first iteration process, $E_{QPSK}$, $E_{16QAM}$, or $E_{64QAM}$ is 0, and $V_{QPSK}$, $V_{16QAM}$, and $V_{64QAM}$ are 1. In the non-first iteration process, $E_{QPSK}$, $E_{16QAM}$, $E_{64QAM}$, $V_{QPSK}$, $V_{16QAM}$, and $V_{64QAM}$ may be obtained by means of calculation by using formula 2. $E(x_j)$ indicates the average value of the jth layer of the second transmit signal and may be obtained by means of calculation according to formula (1-27).

In conclusion, the method for obtaining $V(x_j)$ in manner 1 by using formula (1-30) is relatively complex and has a large calculation volume, and the obtained $V(x_j)$ is a precise variance of the jth layer of the second transmit signal. The method for obtaining $V(x_j)$ in manner 2 by using formula (1-29) is relatively simple and has a small calculation volume, but the obtained $V(x_j)$ is an approximate value not a precise variance of the jth layer of the second transmit signal. The method for obtaining $V(x_j)$ in manner 2 by using formula (1-31) has medium complexity, and the obtained $V(x_j)$ is a precise variance of the jth layer of the second transmit signal.

It should be noted that for each layer of the second transmit signal, the terminal calculates the average value of each layer of the second transmit signal and the variance of each layer of the second transmit signal according to the probability set corresponding to the unknown modulation order of each layer of the second transmit signal, and calculates the LLR of each layer of the transmit signal according to the average value of each layer of the second transmit signal and the variance of each layer of the second transmit signal that are obtained by means of calculation, to obtain the first transmit signal by means of decoding. That is, the terminal can calculate the average value and the variance of each layer of the second transmit signal by using the probability set corresponding to the modulation order of each layer of the second transmit signal, to obtain the first transmit signal by means of demodulation without obtaining a specific value of the modulation order of each layer of the second transmit signal by means of estimation. This is different from the prior art in which the average value and the variance of each layer of the second transmit signal need to be calculated according to an estimated modulation order, so as to calculate the LLR of each layer of the transmit signal and then obtain the first transmit signal by means of decoding. Therefore, estimation accuracy of an existing SLIC demodulation mechanism can be improved, co-channel interference can be effectively cancelled, a frame error rate can be reduced, and demodulation performance can be improved.

It should be noted that step 202 and step 203 are described by using an example of calculating the average value and the variance of the jth layer of the second transmit signal, and a method for calculating an average value and a variance of another layer of the second transmit signal is similar. Details are not described herein again.

204. The terminal calculates a log-likelihood ratio LLR corresponding to each layer of the transmit signal according to an average value of each layer of the second transmit signal and a variance of each layer of the second transmit signal.

After obtaining the average values and the variances of all layers of the second transmit signal by using step 202 and step 203, the terminal may perform soft interference cancellation according to formula (1-2) and with reference to an average value of the first transmit signal that is obtained by using a known demodulation parameter, and calculate the LLR corresponding to each layer of the transmit signal according to formula (1-4), formula (1-5), formula (1-6a), formula (1-8), formula (1-9), and formula (1-10) and with reference to a precoding matrix B and a variance of the first transmit signal that is obtained by using the known demodulation parameter.

In addition, in this embodiment of the present invention, the precoding matrix B and a precoding matrix $b_k$ corresponding to each layer of the transmit signal may be obtained according to a demodulation parameter other than the modulation order. Therefore, the variance of each layer of the equivalent transmit signal may be obtained according to formula (1-7b) after the variance of each layer of the transmit signal is obtained. Therefore, in this embodiment of the present invention, the LLR corresponding to each layer of the transmit signal may be obtained according to formula (1-4), formula (1-5), formula (1-6c), formula (1-8), formula (1-9), and formula (1-10).

205. The terminal determines whether a quantity of iteration times is greater than or equal to a preset quantity threshold; and if the quantity of iteration times is greater than or equal to the preset quantity threshold, ends the iteration process and performs step 206; or if the quantity of iteration times is less than the preset quantity threshold, continues to perform step 202 to enter a next iteration process, and increases the quantity of iteration times by 1.

206. The terminal performs decoding according to the LLR corresponding to each layer of the first transmit signal in the transmit signal, to obtain the first transmit signal.

For the terminal, the first transmit signal sent by the serving cell is a wanted signal that needs to be obtained by means of demodulation, and the second transmit signal sent by the interference cell is an interference signal that does not need to be obtained by means of demodulation. Therefore, the terminal may perform decoding according to the LLR corresponding to each layer of the first transmit signal in the LLRs of all the layers of the transmit signal, to obtain the first transmit signal.

It should be noted that this embodiment of the present invention is described by using an example in which the unknown demodulation parameter includes only the modulation order in the first type of unknown demodulation parameter. When the unknown demodulation parameter includes multiple unknown demodulation parameters of the first type, impact of the multiple unknown demodulation parameters on the average value and the variance of each layer of the second transmit signal needs to be considered. In addition, the preset value set is permutations and combinations of all values in the preset value set corresponding to the multiple unknown demodulation parameters of the first type, and a probability in the probability set is a probability corresponding to a value obtained in the foregoing permutations and combinations. For example, when the unknown demodulation parameter includes two unknown demodulation parameters of the first type: the modulation order and the power ratio of data to pilot, if a preset value set of the modulation scheme MM corresponding to the modulation order is {QPSK, 16QAM, 64QAM}, and a preset value set of the power ratio of data to pilot PA is {0 dB, -3 dB}, the preset value set corresponding to all the unknown demodulation parameters is {(MM=QPSK, PA=0 dB), (MM=QPSK, PA=-3 dB), (MM=16QAM, PA=0 dB), (MM=16QAM, PA=-3 dB), (MM=64QAM, PA=0 dB), (MM=64QAM, PA=-3dB)}. The probability set is {$P_{(MM=QPSK, PA=0\,dB)}$, $P_{(MM=QPSK, PA=3\,dB)}$, $P_{(MM=16QAM, PA=0\,dB)}$, $P_{(MM=16QAM, PA=-3\,dB)}$, $P_{(MM=64QAM, PA=0\,dB)}$, $P_{(MM=64QAM, PA=-3\,dB)}$}. When the modulation order MM is independent of the power ratio of data to pilot PA in a symbol domain, the probability set may be {$P_{MM=QPSK}P_{PA=0\,dB}$, $P_{MM=QPSK}P_{PA=-3\,dB}$, $P_{MM=16QAM}P_{PA=0\,dB}$, $P_{MM=16QAM}P_{PA=-3\,dB}$, $P_{MM=64QAM}P_{PA=0\,dB}$, $P_{MM=64QAM}P_{PA=-3\,dB}$}.

Further, the terminal may calculate the average value of each layer of the second transmit signal and the variance of each layer of the second transmit signal according to the probability set corresponding to the unknown demodulation parameter of each layer of the second transmit signal by using the method described in this embodiment of the present invention, to obtain the first transmit signal by means of demodulation. According to the method described in this embodiment, it is easy to expand a case in which the unknown demodulation parameter includes only one unknown demodulation parameter of the first type into a case in which the unknown demodulation parameter includes multiple unknown demodulation parameters of the first type. Details are not described herein.

This embodiment of the present invention provides the signal demodulation method. When the modulation order in the first type of unknown demodulation parameter is unknown, the terminal calculates the average value and the variance of each layer of the second transmit signal according to the probabilities corresponding to the multiple values in the preset value set of the modulation order of each layer of the second transmit signal sent by the interference cell, and calculates the LLR of each layer of the transmit signal according to the average value and the variance of each layer of the second transmit signal that are obtained by means of calculation, to obtain, by means of decoding, the first transmit signal sent by the serving cell. This is different from the prior art in which the first transmit signal needs to be obtained by means of decoding according to an estimated modulation order. Therefore, estimation accuracy of the existing SLIC demodulation mechanism can be improved, and demodulation performance can be improved.

**Embodiment 4**

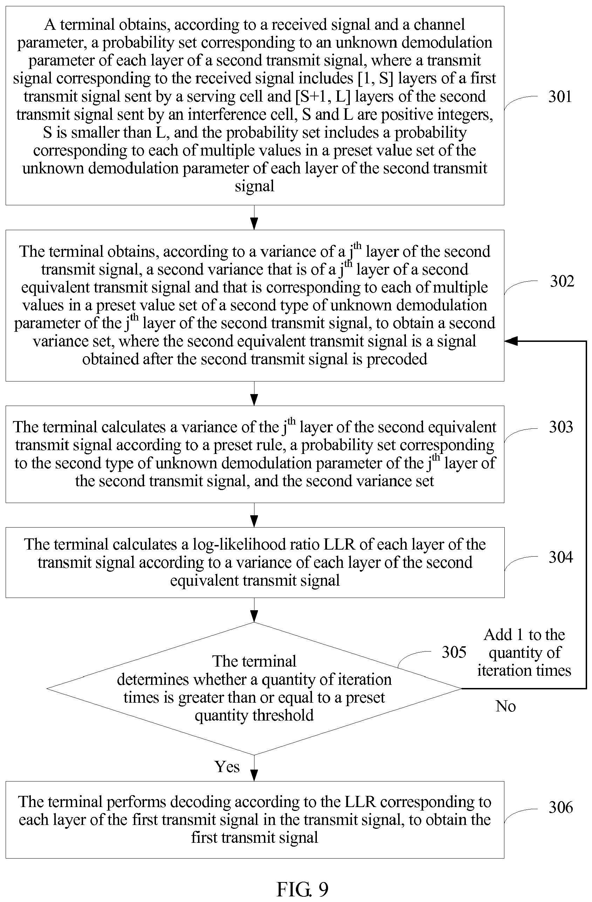

The following embodiment of the present invention provides a signal demodulation method. Description is provided by using an example in which an unknown demodulation parameter includes only a rank in a second type of unknown demodulation parameter. Referring to FIG. 9, the method may include the following steps.

301. A terminal obtains, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal.

Refer to formula (1-1) for an expression of a received signal in any resource element. For details, refer to the description in step 101. When the unknown demodulation parameter is the rank, if a preset value set of the rank is {1, 2}, a probability set corresponding to the rank is {$P_{RI=1}$, $P_{RI=2}$}. When the rank is 1, a precoding vector $b_{j1}$ corresponding to a $j^{th}$ layer of the second transmit signal is a vector. When the rank is 1, a precoding matrix $b_{j2}$ corresponding to the $j^{th}$ layer of second transmit signal is a matrix. The terminal may obtain, according to the received signal and the channel parameter, a probability corresponding to any value of the rank of each layer of the second transmit signal, to obtain the probability set.

For example, the terminal may obtain, by means of calculation according to the received signal and the channel parameter by using the improved generalized log maximum likelihood algorithm in the foregoing step 201, probabilities $P_{RI=1}$ and $P_{RI=2}$ corresponding to different values of the rank of each layer of the second transmit signal. Certainly, another algorithm may also be used for calculation. This is not specifically limited herein.

After obtaining the probability set corresponding to the unknown demodulation parameter of each layer of the second transmit signal, the terminal may enter an improved SLIC detection process. Referring to FIG. 8, the improved SLIC detection process is calculating a variance of each layer of a second equivalent transmit signal according to the probability set corresponding to the unknown demodulation parameter of each layer of the second transmit signal by using an iteration process, to calculate a log-likelihood ratio LLR corresponding to each layer of the transmit signal. Any iteration process may include the following steps 302 to 304.

Before entering the improved SLIC detection process, the terminal may further preset a quantity of iteration times, and set an initial value. For example, an initial value of the quantity of iteration times may be 0.

302. The terminal obtains, according to a variance of a $j^{th}$ layer of the second transmit signal, a second variance that is of a $j^{th}$ layer of a second equivalent transmit signal and that is corresponding to each of multiple values in a preset value set of a second type of unknown demodulation parameter of the $j^{th}$ layer of the second transmit signal, to obtain a second variance set, where the second equivalent transmit signal is a signal obtained after the second transmit signal is precoded.

Before performing step 302, the terminal may determine, according to the quantity of iteration times, whether the current iteration process is a first iteration process.

If the quantity of iteration times is the initial value, the terminal may determine that the current iteration process is the first iteration process. In the first iteration process, a first variance that is of the $j^{th}$ layer of the second transmit signal and that is corresponding to each of the multiple values in the preset value set of the unknown demodulation parameter of the $j^{th}$ layer of the second transmit signal may be preset to 1.

When the rank is unknown in this embodiment of the present invention, the terminal cannot determine whether each layer of the second transmit signal is corresponding to the precoding vector or the precoding matrix. Therefore, when the first variance that is of the $j^{th}$ layer of the second transmit signal and that is corresponding to each of the multiple values in the preset value set of the unknown demodulation parameter of the $j^{th}$ layer of the second transmit signal is 1, if the rank is 1, the second variance that is of the $j^{th}$ layer of the second equivalent transmit signal and that is corresponding to the $j^{th}$ layer of the second transmit signal is $V_{jrank1}=b_{j1}b_{j1}*$ according to formula (1-7b); or if the rank is 2, the second variance of the $j^{th}$ layer of the second equivalent transmit signal corresponding to the $j^{th}$ layer of the second transmit signal is $V_{jrank2}=b_{j2}b_{j2}*$ according to formula (1-7b). Herein, it can be learned that $$b_{j2}b_{j2}{}^{*}=\frac{1}{2}I$$ according to a unitary matrix feature of $b_2$. Therefore, in the first iteration process, the second variance set {$V_{jrank1}$, $V_{jrank2}$} of the $j^{th}$ layer of the second equivalent transmit signal is {$b_{j}1b_{j}1*$, $\frac{1}{2}I$ }.

If the quantity of iteration times is not the initial value, the terminal may determine that the current iteration process is not the first iteration process. In a non-first iteration process, the terminal may obtain, according to an LLR that is corresponding to the $j^{th}$ layer of the second transmit signal and that is obtained by means of calculation in a previous iteration process, a first variance $V(x_jx_j*)$ that is of the $j^{th}$ layer of the second transmit signal and that is corresponding to each of the multiple values in the preset value set of the rank in this iteration process, that is, $v_j$; and calculate, according to $\boldsymbol{b}_{j1}$, $\boldsymbol{b}_{j2}$, and formula (1-7b), a corresponding variance $V_{jrank1}=\boldsymbol{b}_{j1}v_j\boldsymbol{b}^*_{j1}$ of the $j^{th}$ layer of the equivalent transmit signal when the rank is 1, and a corresponding variance $V_{jrank2}=\boldsymbol{b}_{j2}v_j\boldsymbol{b}^*_{j2}$ of the $j^{th}$ layer of the equivalent transmit signal when the rank is 2, to obtain a second variance set $\{V_{jrank1}, V_{jrank2}\}$.

303. The terminal calculates a variance of the $j^{th}$ layer of the second equivalent transmit signal according to a preset rule, a probability set corresponding to the second type of unknown demodulation parameter of the $j^{th}$ layer of the second transmit signal, and the second variance set.

Optionally, the terminal may calculate a weighted average value of multiple elements in the second variance set according to formula 4 and the probability set corresponding to the second type of unknown demodulation parameter of the $j^{th}$ layer of the second transmit signal, to obtain the variance of the $j^{th}$ layer of the second equivalent transmit signal. Formula 4 may be represented as follows:

$$V\left(X_j\right) = \sum_{w=1}^{n} V_w p_w \qquad \text{(formula 4)}$$

Herein, $V(X_j)$ indicates the variance of the $j^{th}$ layer of the second transmit signal, n indicates a quantity of values in the preset value set of the second type of unknown demodulation parameter of the $j^{th}$ layer of the second transmit signal, n is a positive integer, w is a positive integer in an interval of [1, n], indicates an element that is in the first variance set and that is corresponding to a $w^{th}$ value in the preset value set, and $p_w$ indicates an element that is in the probability set and that is corresponding to the $w^{th}$ value in the preset value set.

In this embodiment of the present invention, when the unknown demodulation parameter is the rank, and the preset value set is $\{1, 2\}$, w is 2, $V_w$ indicates $V_{jrank1}$ or $V_{jrank2}$ in the first variance set, and $p_w$ indicates $P_{jRI=1}$ or $P_{jRI=2}$ in the probability set. An expression for calculating the variance $V(X_j)$ of the $j^{th}$ layer of the second equivalent transmit signal according to formula 4 may be as follows:

$$V\left(X_j\right) = V_{jrank1}\, P_{jRI=1} + V_{jrank2}\, P_{jRI=2} \qquad \text{(1-32)}$$

In the first iteration process, $V_{jrank1}$ is $\boldsymbol{b}_{j1}\boldsymbol{b}_{j1}^*$, and $V_{jrank2}$ is $\dfrac{1}{2}I$. In the non-first iteration process, $V_{jrank1}$ and $V_{jrank2}$ may be obtained by using an existing technology according to the LLR obtained by means of calculation in the previous iteration process.

Optionally, the terminal may further calculate the variance of the $j^{th}$ layer of the second equivalent transmit signal according to the probability set corresponding to the second type of unknown demodulation parameter of the $j^{th}$ layer of the second transmit signal, the second variance set, and formula 5. Formula 5 may be represented as follows:

$$V\left(X_j\right) = \sum_{w=1}^{n} V_w p_w + \sum_{w=1}^{n} p_w E_w^2 - \left(\sum_{w=1}^{n} p_w E_w\right)^2$$

$$= \sum_{w=1}^{n} V_w p_w + \sum_{w=1}^{n} p_w E_w^2 - \left(E\left(X_j\right)\right)^2 \qquad \text{(formula 5)}$$

Herein, $V(X_j)$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], $V_w$ indicates an element that is in the second variance set and that is corresponding to the $w^{th}$ value in the preset value set, $p_w$ indicates an element that is in the probability set and that is corresponding to the $w^{th}$ value in the preset value set, $E_t$ indicates a second average value of the $j^{th}$ layer of the second equivalent transmit signal that is corresponding to a $t^{th}$ value in the preset value set, and $E(X_j)$ indicates an average value of the $j^{th}$ layer of the second equivalent transmit signal.

In this embodiment of the present invention, when the unknown demodulation parameter is the rank, and the preset value set is $\{1, 2\}$, n is 2, $V_w$ indicates $V_{jrank1}$ or $V_{jrank2}$ in the first variance set, $p_w$ indicates $P_{jRI=1}$ or $P_{jRI=2}$ in the probability set, and $E_t$ indicates a second average value that is of the $j^{th}$ layer of the second equivalent transmit signal and that is corresponding to the $w^{th}$ value in the preset value set, and can be obtained by means of calculation according to a known demodulation parameter. For example, when the first average value that is of the $j^{th}$ layer of the second transmit signal and that is corresponding to the $w^{th}$ value in the preset value set is obtained according to the known demodulation parameter, the second average value of the $j^{th}$ layer of the second equivalent transmit signal may be obtained according to formula (1-3). The expression for calculating the variance $V(X_j)$ of the $j^{th}$ layer of the second equivalent transmit signal according to formula 5 may be as follows:

$$V\left(X_j\right)=V_{jrank1}\,P_{jRI=1}+V_{jrank2}\,P_{jRI=2}+\sum_{w=1}^{n} p_w E_w^2 -\left(E\left(X_j\right)\right)^2 \qquad (1\text{-}33)$$

Likewise, in the first iteration process, $V_{jrank1}$ is $\boldsymbol{b}_{j1}\boldsymbol{b}_{j1}{}^*$, and $\boldsymbol{V_{jrank2}}$ is $\dfrac{1}{2}I$ . In the non-first iteration process, $V_{jrank1}$ and $\boldsymbol{V_{jrank2}}$ may be obtained by using the existing technology according to the LLR obtained by means of calculation in the previous iteration process.

It should be noted that step 302 and step 303 are described by using an example in which the variance of the $j^{th}$ layer of the second equivalent transmit signal is calculated, and a method for calculating a variance of another layer of the second equivalent transmit signal is similar. Details are not described herein. In addition, the terminal may further calculate a variance of each layer of a first equivalent transmit signal and an average value of each layer of the transmit signal according to the known demodulation parameter by using the existing technology.

It should be noted that for each layer of the second transmit signal, the terminal calculates the variance of each layer of the second equivalent transmit signal according to a probability set corresponding to an unknown rank of each layer of the second transmit signal, and calculates an LLR of each layer of the transmit signal according to the variance of each layer of the second equivalent transmit signal that is obtained by means of calculation, to obtain the first transmit signal by means of decoding. That is, the terminal can calculate the variance of each layer of the second equivalent transmit signal according to the probability set corresponding to the rank of each layer of the second transmit signal, to obtain the first transmit signal by means of demodulation without obtaining a specific value of the rank of each layer of the second transmit signal by means of estimation. This is different from the prior art in which the average value and the variance of each layer of the second transmit signal need to be calculated according to an estimated rank, so as to calculate the LLR of each layer of the transmit signal and then obtain the first transmit signal by means of decoding. Therefore, estimation accuracy of an existing SLIC demodulation mechanism can be improved, co-channel interference can be effectively cancelled, a frame error rate can be reduced, and demodulation performance can be improved.

304. The terminal calculates a log-likelihood ratio LLR of each layer of the transmit signal according to a variance of each layer of the second equivalent transmit signal.

Specifically, the terminal may perform soft interference cancellation according to the average value of each layer of the transmit signal and formula (1-2), and calculate an LLR corresponding to each layer of the transmit signal according to the variance of each layer of the second equivalent transmit signal, the variance of each layer of the first equivalent transmit signal, formula (1-4), formula (1-5), formula (1-6b), formula (1-8), formula (1-9), and formula (1-10).

305. The terminal determines whether a quantity of iteration times is greater than or equal to a preset quantity threshold; and if the quantity of iteration times is greater than or equal to the preset quantity threshold, ends the iteration process and performs step 306; or if the quantity of iteration times is less than the preset quantity threshold, continues to perform step 302 to enter a next iteration process, and increases the quantity of iteration times by 1.

306. The terminal performs decoding according to the LLR corresponding to each layer of the first transmit signal in the transmit signal, to obtain the first transmit signal.

After obtaining the LLR corresponding to each layer of the transmit signal, the terminal may perform decoding according to the LLR corresponding to each layer of the first transmit signal in the transmit signal, to obtain the first transmit signal sent by the serving cell.

It should be noted that this embodiment of the present invention is described by using an example in which the unknown demodulation parameter includes only one unknown demodulation parameter of the second type. When the unknown demodulation parameter includes multiple unknown demodulation parameters of the second type, impact of the multiple unknown demodulation parameters of the second type on the variance of each layer of the second equivalent transmit signal needs to be considered. A signal demodulation method performed according to all values and corresponding probabilities when the unknown demodulation parameter includes multiple unknown demodulation parameters of the second type is easy to obtain according to the signal demodulation method provided in this embodiment of the present invention when the unknown demodulation parameter includes only one unknown demodulation parameter of the second type. Details are not described herein.

This embodiment of the present invention provides the signal demodulation method. When the rank of the second type of unknown demodulation parameter is unknown, the terminal calculates the variance of each layer of the second equivalent transmit signal according to the probabilities corresponding to the multiple values in the preset value set of the rank of each layer of the second transmit signal sent by the interference cell, and calculates the LLR of each layer of the transmit signal according to the variance of each layer of the second equivalent transmit signal that is obtained by means of calculation, to obtain, by means of decoding, the first transmit signal sent by the serving cell. This is different from the prior art in which the first transmit signal needs to be obtained by means of decoding according to the estimated rank. Therefore, estimation accuracy of the existing SLIC demodulation mechanism can be improved, and demodulation performance can be improved.

**Embodiment 5**

This embodiment of the present invention provides a signal demodulation method. Description is provided by using an example in which an unknown demodulation parameter includes a modulation order in a first type of unknown demodulation parameter and a rank in a second type of unknown demodulation parameter. Referring to FIG. 10A and FIG. 10B, the method may include the following steps.

401. A terminal obtains, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal.

Refer to formula (1-1) for an expression of a received signal in any resource element. For details, refer to the description in step 101. In this embodiment of the present invention, when the unknown demodulation parameter includes the modulation order and the rank, if a preset value set of a modulation scheme corresponding to the modulation order is {QPSK, 16QAM, 64QAM}, and a preset value set corresponding to the rank is {1, 2}, a probability set corresponding to the modulation order is {$P_{QPSK}$, $P_{16QAM}$, $P_{64QAM}$}, and a probability set corresponding to the rank is $P_{RI=1}$, $P_{RI=2}$}. For a specific process of calculating an element in the probability set corresponding to the modulation order, refer to the description in step 201. For a specific method of calculating an element in the probability set corresponding to the rank, refer to the description in step 301.

After obtaining the probability set corresponding to the unknown demodulation parameter of each layer of the second transmit signal, the terminal may enter an improved SLIC detection process. Referring to FIG. 8, the improved SLIC detection process is calculating an average value and a variance of each layer of the second transmit signal and a variance of a second equivalent transmit signal according to the probability set corresponding to the unknown demodulation parameter of each layer of the second transmit signal by using an iteration process, to calculate a log-likelihood ratio LLR corresponding to each layer of the transmit signal. Any iteration process may include the following steps 402 to 404.

Before entering the improved SLIC detection process, the terminal may further preset a quantity of iteration times, and set an initial value. For example, an initial value of the quantity of iteration times may be 0.

402. The terminal obtains a first average value of a $j^{th}$ layer of the second transmit signal and a variance of the $j^{th}$ layer of the second transmit signal that are corresponding to each of multiple values in a preset value set of a first type of unknown demodulation parameter of the $j^{th}$ layer of the second transmit signal, to obtain a first average value set and a first variance set.

403. The terminal calculates an average value of the $j^{th}$ layer of the second transmit signal and a variance of the $j^{th}$ layer of the second transmit signal according to a preset rule, a probability set corresponding to the first type of unknown demodulation parameter of the $j^{th}$ layer of the second transmit signal, the first average value set, and the first variance set.

For the process of calculating the average value and the variance of the $j^{th}$ layer of the second transmit signal in step 402 and step 403, refer to the specific description in step 202 and step 203.

404. The terminal obtains, according to the variance of the $j^{th}$ layer of the second transmit signal, a second variance of a $j^{th}$ layer of a second equivalent transmit signal corresponding to each of multiple values in a preset value set of a second type of unknown demodulation parameter of the $j^{th}$ layer of the second transmit signal, to obtain a second variance set, where the second equivalent transmit signal is a signal obtained after the second transmit signal is precoded.

For details about step 404, refer to the description in step 302. However, step 404 is different from step 302. In step 302, the variance of the second transmit signal is obtained by means of calculation according to a known demodulation parameter by using an existing technology. However, in step 404, the variance of the second transmit signal is obtained by means of calculation according to the first type of unknown demodulation parameter by using step 402 and step 403.

405. The terminal calculates a variance of the $j^{th}$ layer of the second equivalent transmit signal according to a preset rule, a probability set corresponding to the second type of unknown demodulation parameter of the $j^{th}$ layer of the second transmit signal, and the second variance set.

For details about step 405, refer to the description in step 303.

It should be noted that for each layer of the second transmit signal, the terminal calculates the average value and the variance of each layer of the second transmit signal and the variance of each layer of the second equivalent transmit signal according to the probability set corresponding to the unknown demodulation parameter of each layer of the second transmit signal, and calculates the LLR of each layer of the transmit signal according to the average value and the variance of each layer of the second transmit signal and the variance of each layer of the second equivalent transmit signal that are obtained by means of calculation, to obtain the first transmit signal by means of decoding. That is, the terminal can calculate the average value and the variance of each layer of the second transmit signal and the variance of each layer of the second equivalent transmit signal according to the probability set corresponding to the unknown demodulation parameter of each layer of the second transmit signal, to obtain the first transmit signal by means of demodulation without obtaining a specific value of the unknown demodulation parameter of each layer of the second transmit signal by means of estimation. This is different from the prior art in which the average value and the variance of each layer of the second transmit signal need to be calculated according to an estimated demodulation parameter, so as to calculate the LLR of each layer of the transmit signal and then obtain the first transmit signal by means of decoding. Therefore, estimation accuracy of an existing SLIC demodulation mechanism can be improved, co-channel interference can be effectively cancelled, a frame error rate can be reduced, and demodulation performance can be improved.

406. The terminal calculates a log-likelihood ratio LLR of each layer of the transmit signal according to the average value of each layer of the second transmit signal, the variance of each layer of the second transmit signal, and the variance of each layer of the second equivalent transmit signal.

Specifically, the terminal may perform soft interference cancellation by using formula (1-2) according to the average value of each layer of the second transmit signal and with reference to an average value that is of each layer of the first transmit signal and that is obtained according to a known demodulation parameter by using an existing technology. The terminal may calculate the LLR corresponding to each layer of the transmit signal according to the variance of each layer of the second equivalent transmit signal, a variance that is of each layer of a first equivalent transmit signal and that is obtained according to a known demodulation parameter, formula (1-4), formula (1-5), formula (1-6a), formula (1-8), formula (1-9), and formula (1-10).

407. The terminal determines whether a quantity of iteration times is greater than or equal to a preset quantity threshold; and if the quantity of iteration times is greater than or equal to the preset quantity threshold, ends the iteration process and performs step 408; or if the quantity of iteration times is less than the preset quantity threshold, continues to perform step 402 to enter a next iteration process, and increases the quantity of iteration times by 1.

408. The terminal performs decoding according to the LLR corresponding to each layer of the first transmit signal in the transmit signal, to obtain the first transmit signal.

After obtaining the LLR corresponding to each layer of the transmit signal, the terminal may perform decoding according to the LLR corresponding to each layer of the first transmit signal in the transmit signal, to obtain the first transmit signal sent by the serving cell.

It should be noted that this embodiment of the present invention is described by using an example in which the unknown demodulation parameter includes only one unknown demodulation parameter of the first type and one unknown demodulation parameter of the second type. When the unknown demodulation parameter includes multiple unknown demodulation parameters of the first type and multiple demodulation parameters of the second type, impact of all the unknown demodulation parameters on the average value and the variance of each layer of the second transmit signal and the variance of each layer of the second equivalent transmit signal needs to be considered. A signal demodulation method performed according to all values and corresponding probabilities when the unknown demodulation parameter includes multiple unknown demodulation parameters of the first type and multiple unknown demodulation parameters of the second type can be easily obtained according to the signal demodulation method provided in this embodiment of the present invention and performed when the unknown demodulation parameter includes only one unknown demodulation parameter of the first type and one unknown demodulation parameter of the second type. Details are not described herein.

This embodiment of the present invention provides the signal demodulation method. When the unknown demodulation parameter includes the modulation order in the first type of unknown demodulation parameter and the rank in the second type of unknown demodulation parameter, the terminal calculates the average value of each layer of the second transmit signal and the variance of each layer of the second transmit signal according to the probability set corresponding to the modulation order of each layer of the second transmit signal sent by the interference cell, calculates the variance of each layer of the second equivalent transmit signal according to the probability set corresponding to the rank of each layer of the second transmit signal and the variance of each layer of the second transmit signal, and calculates the LLR of each layer of the transmit signal, to obtain, by means of decoding, the first transmit signal sent by the serving cell. This is different from the prior art in which the first transmit signal needs to be obtained by means of decoding according to an estimated modulation order and rank. Therefore, estimation accuracy of the existing SLIC demodulation mechanism can be improved, and demodulation performance can be improved.

It should be noted that this embodiment of the present invention is described by using an LTE communications system as an example. In addition to the LTE communications system, there is another communications system such as a multiple cell system or a multi-user MIMO system, for example, a Global System for Mobile Communications (Global System for Mobile Communication, GSM), Wideband Code Division Multiple Access (Wideband Code Division Multiple Access, W-CDMA), and Time Division-Synchronous Code Division Multiple Access (Time Division-Synchronous Code Division Multiple Access).

In the several embodiments provided in this application, it should be understood that the disclosed terminal and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments. In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

For specific functions of an apparatus, a system, or a device, refer to the description of the foregoing method embodiments.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1.   A terminal, comprising:

a probability set obtaining circuit, configured to perform a first operation, wherein the first operation comprises: obtaining, according to a received signal and a channel parameter, a probability set corresponding to an unknown demodulation parameter of each layer of a second transmit signal, wherein a transmit signal corresponding to the received signal comprises [1, S] layers of a first transmit signal sent by a serving cell and [S+1, L] layers of the second transmit signal sent by an interference cell, S and L are positive integers, S is smaller than L, and the probability set comprises probabilities respectively corresponding to multiple values in a preset value set of the unknown demodulation parameter of each layer of the second transmit signal;
a symbol level interference cancellation SLIC detection circuit, coupled to the probability set obtaining circuit and configured to perform a second operation, wherein the second operation comprises: calculating at least one of an average value of each layer of the second transmit signal, a variance of each layer of the second transmit signal, or a variance of each layer of a second equivalent transmit signal according to the probability set corresponding to the unknown demodulation parameter of each layer of the second transmit signal, wherein the second equivalent transmit signal is a signal obtained after the second transmit signal is precoded, and the SLIC is further configured to perform a third operation, and the third operation comprises: calculating, according to the at least one of the average value of each layer of the second transmit signal, the variance of each layer of the second transmit signal, or the variance of each layer of the second equivalent transmit signal, a log-likelihood ratio LLR corresponding to each layer of the transmit signal; and

a decoding circuit, coupled to the SLIC detection circuit and configured to perform a fourth operation, wherein the fourth operation comprises: performing decoding according to the LLR corresponding to each layer of the first transmit signal in the transmit signal, to obtain the first transmit signal.

2. The terminal according to claim 1, wherein the unknown demodulation parameter comprises at least one of a modulation order, a power ratio of data to pilot, a transmission mode, a rank, or a precoding matrix indicator PMI.

3. The terminal according to claim 1 or 2, wherein the SLIC detection circuit is further configured to preset a quantity of iteration times before performing the second operation; and

after performing the third operation, the SLIC detection circuit is further configured to:

determine whether the quantity of iteration times is greater than or equal to a preset quantity threshold; and

if the quantity of iteration times is greater than or equal to the preset quantity threshold, end an iteration process, and trigger the decoding circuit to perform the fourth operation; or

if the quantity of iteration times is less than the preset quantity threshold, continue to perform the second operation to enter a next iteration process, and increase the quantity of iteration times by 1.

4. The terminal according to any one of claims 1 to 3, wherein when the unknown demodulation parameter comprises only a first type of unknown demodulation parameter, the SLIC detection circuit performs the second operation to specifically:

calculate the average value of each layer of the second transmit signal and the variance of each layer of the second transmit signal according to a probability set corresponding to the first type of unknown demodulation parameter of each layer of the second transmit signal.

5. The terminal according to any one of claims 1 to 3, wherein when the unknown demodulation parameter comprises only a second type of unknown demodulation parameter, the SLIC detection circuit performs the second operation to specifically:

calculate the variance of each layer of the second equivalent transmit signal according to a probability set corresponding to the second type of unknown demodulation parameter of each layer of the second transmit signal.

6. The terminal according to any one of claims 1 to 3, wherein when the unknown demodulation parameter comprises a first type of unknown demodulation parameter and a second type of unknown demodulation parameter, the SLIC detection circuit performs the second operation to specifically:

calculate the average value of each layer of the second transmit signal and the variance of each layer of the second transmit signal according to a probability set corresponding to the first type of unknown demodulation parameter of each layer of the second transmit signal, and calculate the variance of each layer of the second equivalent transmit signal according to a probability set corresponding to the second type of unknown demodulation parameter of each layer of the second transmit signal and the variance of each layer of the second transmit signal.

7. The terminal according to claim 4 or 6, wherein the first type of unknown demodulation parameter comprises the modulation order and the power ratio of data to pilot.

8. The terminal according to claim 5 or 6, wherein the second type of unknown demodulation parameter comprises the transmission mode, the rank, and the precoding matrix indicator PMI.

9. The terminal according to claim 4 or 6, wherein for a $j^{th}$ layer of the second transmit signal, wherein j is a positive integer in an interval of [S+1, L], when performing the second operation, the SLIC detection circuit is configured to calculate an average value of the $j^{th}$ layer of the second transmit signal and a variance of the $j^{th}$ layer of the second transmit signal according to a probability set corresponding to a first type of unknown demodulation parameter of the $j^{th}$ layer of the second transmit signal, and the process comprises:

obtaining a first average value of the $j^{th}$ layer of the second transmit signal and a variance of the $j^{th}$ layer of the second transmit signal that are corresponding to each of multiple values in a preset value set of the first type of unknown demodulation parameter of the j$^{th}$ layer of the second transmit signal, to obtain a first average value set and a first variance set; and

calculating the average value of the j$^{th}$ layer of the second transmit signal and the variance of the j$^{th}$ layer of the second transmit signal according to a preset rule, the probability set corresponding to the first type of unknown demodulation parameter of the j$^{th}$ layer of the second transmit signal, the first average value set, and the first variance set.

10. The terminal according to claim 5 or 6, wherein for a j$^{th}$ layer of the second transmit signal, wherein j is a positive integer in an interval of [S+1, L], when performing the second operation, the SLIC detection circuit is configured to calculate a variance of a j$^{th}$ layer of the second equivalent transmit signal according to a probability set corresponding to a second type of unknown demodulation parameter of the j$^{th}$ layer of the second transmit signal, and the process comprises:

obtaining, according to a variance of the j$^{th}$ layer of the second transmit signal, a second variance that is of the j$^{th}$ layer of the second equivalent transmit signal and that is corresponding to each of multiple values in a preset value set of the second type of unknown demodulation parameter of the j$^{th}$ layer of the second transmit signal, to obtain a second variance set; and

calculating the variance of the j$^{th}$ layer of the second equivalent transmit signal according to a preset rule, the probability set corresponding to the second type of unknown demodulation parameter of the j$^{th}$ layer of the second transmit signal, and the second variance set.

11. The terminal according to claim 9, wherein when obtaining the first average value of the j$^{th}$ layer of the second transmit signal and the first variance of the j$^{th}$ layer of the second transmit signal that are corresponding to each of the multiple values in the preset value set of the unknown demodulation parameter of the j$^{th}$ layer of the second transmit signal, to obtain the first average value set and the first variance set, the SLIC detection circuit is configured to: calculate, according to an LLR that is corresponding to the j$^{th}$ layer of the second transmit signal and that is obtained by means of calculation in a previous iteration process, the first average value of the j$^{th}$ layer of the second transmit signal and the first variance of the j$^{th}$ layer of the second transmit signal that are corresponding to each of the multiple values in the preset value set of the first type of unknown demodulation parameter of the j$^{th}$ layer of the second transmit signal, to obtain the first average value set and the first variance set.

12. The terminal according to claim 9, wherein when calculating the average value of the j$^{th}$ layer of the second transmit signal according to the preset rule, the probability set corresponding to the first type of unknown demodulation parameter of the j$^{th}$ layer of the second transmit signal, and the first average value set, the SLIC detection circuit is configured to:

calculate a weighted average value of multiple elements in the first average value set according to formula 1 and the probability set corresponding to the first type of unknown demodulation parameter of the j$^{th}$ layer of the second transmit signal, to obtain the average value of the j$^{th}$ layer of the second transmit signal, wherein formula 1 is represented as follows:

$$\mathrm{E}\left(x_j\right) = \sum_{t=1}^{m} \mathrm{E}_t p_t \, ,$$

wherein
E($x_j$) indicates the average value of the j$^{th}$ layer of the second transmit signal, m indicates a quantity of values in the preset value set of the first type of unknown demodulation parameter of the j$^{th}$ layer of the second transmit signal, m is a positive integer, t is a positive integer in an interval of [1, m], $E_t$ indicates an element that is in the first average value set and that is corresponding to a t$^{th}$ value in the preset value set, and $p_t$ indicates an element that is in the probability set and that is corresponding to the t$^{th}$ value in the preset value set.

13. The terminal according to claim 9, wherein when calculating the variance of the j$^{th}$ layer of the second transmit signal according to the preset rule, the probability set corresponding to the first type of unknown demodulation parameter of the j$^{th}$ layer of the second transmit signal, and the first variance set, the SLIC detection circuit is configured to:

calculate a weighted average value of multiple elements in the first variance set according to formula 2 and the probability set corresponding to the first type of unknown demodulation parameter of the $j^{th}$ layer of the second transmit signal, to obtain the variance of the $j^{th}$ layer of the second transmit signal, wherein formula 2 is represented as follows:

$$V\left(x_j\right) = \sum_{t=1}^{m} V_t p_t ,$$

wherein

$v(x_j)$ indicates the variance of the $j^{th}$ layer of the second transmit signal, m indicates a quantity of values in the preset value set of the first type of unknown demodulation parameter of the $j^{th}$ layer of the second transmit signal, m is a positive integer, t is a positive integer in an interval of [1, m], $V_t$ indicates an element that is in the first variance set and that is corresponding to a $t^{th}$ value in the preset value set, and $p_t$ indicates an element that is in the probability set and that is corresponding to the $t^{th}$ value in the preset value set.

14. The terminal according to claim 9, wherein when calculating the variance of the $j^{th}$ layer of the second transmit signal according to the preset rule, the probability set corresponding to the unknown demodulation parameter of the $j^{th}$ layer of the second transmit signal, and the first variance set, the SLIC detection circuit is configured to:

calculate the variance of the $j^{th}$ layer of the second transmit signal according to the probability set corresponding to the unknown demodulation parameter of the $j^{th}$ layer of the second transmit signal, the first variance set, and formula 3, wherein formula 3 is represented as follows:

$$V\left(x_j\right) = \sum_{t=1}^{m} V_t p_t + \sum_{t=1}^{m} p_t E_t^2 - \left(\sum_{t=1}^{m} p_t E_t\right)^2$$

$$= \sum_{t=1}^{m} V_t p_t + \sum_{t=1}^{m} p_t E_t^2 - \left(E\left(x_j\right)\right)^2 ,$$

wherein

$v(x_j)$ indicates the variance of the $j^{th}$ layer of the second transmit signal, m indicates a quantity of values in the preset value set of the first type of unknown demodulation parameter of the $j^{th}$ layer of the second transmit signal, m is a positive integer, t is a positive integer in an interval of [1, m], $V_t$ indicates an element that is in the first variance set and that is corresponding to a $t^{th}$ value in the preset value set, $p_t$ indicates an element that is in the probability set and that is corresponding to the $t^{th}$ value in the preset value set, $E_t$ indicates an element that is in the first average value set and that is corresponding to the $t^{th}$ value in the preset value set, and $E(x_j)$ indicates the average value of the $j^{th}$ layer of the second transmit signal.

15. The terminal according to claim 10, wherein when calculating the variance of the $j^{th}$ layer of the second equivalent transmit signal according to the preset rule, the probability set corresponding to the second type of unknown demodulation parameter of the $j^{th}$ layer of the second transmit signal, and the second variance set, the SLIC detection circuit is configured to:

calculate a weighted average value of multiple elements in the second variance set according to formula 4 and the probability set corresponding to the second type of unknown demodulation parameter of the $j^{th}$ layer of the second transmit signal, to obtain the variance of the $j^{th}$ layer of the second equivalent transmit signal, wherein formula 4 is represented as follows:

$$V\left(X_j\right) = \sum_{w=1}^{n} V_w p_w ,$$

wherein

$v(x_j)$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], $V_w$ indicates an element that is in the first variance set and that is corresponding to a $w^{th}$ value in the preset value set, and $p_w$ indicates an element that is in the probability set and that is corresponding to the $w^{th}$ value in the preset value set.

16. The terminal according to claim 10, wherein when calculating the variance of the $j^{th}$ layer of the second equivalent transmit signal according to the preset rule, the probability set corresponding to the second type of unknown demodulation parameter of the $j^{th}$ layer of the second transmit signal, and the second variance set, the SLIC detection circuit is configured to:

calculate the variance of the $j^{th}$ layer of the second equivalent transmit signal according to the probability set corresponding to the second type of unknown demodulation parameter of the $j^{th}$ layer of the second transmit signal, the second variance set, and formula 5, wherein
formula 5 is represented as follows:

$$V\left(X_j\right) = \sum_{w=1}^{n} V_w p_w + \sum_{w=1}^{n} p_w E_w^2 - \left(\sum_{w=1}^{n} p_w E_w\right)^2$$
$$= \sum_{w=1}^{n} V_w p_w + \sum_{w=1}^{n} p_w E_w^2 - \left(E\left(X_j\right)\right)^2 \quad ,$$

wherein

$v(x_j)$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], indicates an element that is in the second variance set and that is corresponding to a $w^{th}$ value in the preset value set, $p_w$ indicates an element that is in the probability set and that is corresponding to the $w^{th}$ value in the preset value set, $E_t$ indicates a second average value that is of the $j^{th}$ layer of the second equivalent transmit signal and that is corresponding to the $w^{th}$ value in the preset value set, and $E(X_j)$ indicates an average value of the $j^{th}$ layer of the second equivalent transmit signal.

17. A signal demodulation method, comprising:

step 1: obtaining, according to a received signal and a channel parameter, a probability set corresponding to an unknown demodulation parameter of each layer of a second transmit signal, wherein a transmit signal corresponding to the received signal comprises [1, S] layers of a first transmit signal sent by a serving cell and [S+1, L] layers of the second transmit signal sent by an interference cell, S and L are positive integers, S is smaller than L, and the probability set comprises a probability corresponding to each of multiple values in a preset value set of the unknown demodulation parameter of each layer of the second transmit signal;
step 2: calculating at least one of an average value of each layer of the second transmit signal, a variance of each layer of the second transmit signal, or a variance of each layer of a second equivalent transmit signal according to the probability set corresponding to the unknown demodulation parameter of each layer of the second transmit signal, wherein the second equivalent transmit signal is a signal obtained after the second transmit signal is precoded;
step 3: calculating, according to the at least one of the average value of each layer of the second transmit signal, the variance of each layer of the second transmit signal, or the variance of each layer of the second equivalent transmit signal, a log-likelihood ratio LLR corresponding to each layer of the transmit signal; and
step 4: performing decoding according to the LLR corresponding to each layer of the first transmit signal in the transmit signal, to obtain the first transmit signal.

18. The method according to claim 17, wherein the unknown demodulation parameter comprises at least one of a modulation order, a power ratio of data to pilot, a transmission mode, a rank, or a precoding matrix indicator PMI.

19. The method according to claim 17 or 18, wherein before step 2, the method further comprises: presetting a quantity of iteration times; and

after step 3, the method further comprises:

determining whether the quantity of iteration times is greater than or equal to a preset quantity threshold; and
if the quantity of iteration times is greater than or equal to the preset quantity threshold, ending an iteration process, and performing step 4; or
if the quantity of iteration times is less than the preset quantity threshold, continuing to perform step 2 to enter a next iteration process, and increasing the quantity of iteration times by 1.

20. The method according to any one of claims 17 to 19, wherein when the unknown demodulation parameter comprises only a first type of unknown demodulation parameter, step 2 comprises:
calculating the average value of each layer of the second transmit signal and the variance of each layer of the second transmit signal according to a probability set corresponding to the first type of unknown demodulation parameter of each layer of the second transmit signal.

21. The method according to any one of claims 17 to 19, wherein when the unknown demodulation parameter comprises only a second type of unknown demodulation parameter, step 2 comprises:
calculating the variance of each layer of the second equivalent transmit signal according to a probability set corresponding to the second type of unknown demodulation parameter of each layer of the second transmit signal.

22. The method according to any one of claims 17 to 19, wherein when the unknown demodulation parameter comprises a first type of unknown demodulation parameter and a second type of unknown demodulation parameter, step 2 comprises:
calculating the average value of each layer of the second transmit signal and the variance of each layer of the second transmit signal according to a probability set corresponding to the first type of unknown demodulation parameter of each layer of the second transmit signal, and calculating the variance of each layer of the second equivalent transmit signal according to a probability set corresponding to the second type of unknown demodulation parameter of each layer of the second transmit signal and the variance of each layer of the second transmit signal.

23. The method according to claim 20 or 22, wherein the first type of unknown demodulation parameter comprises the modulation order and the power ratio of data to pilot.

24. The method according to claim 21 or 22, wherein the second type of unknown demodulation parameter comprises the transmission mode, the rank, and the precoding matrix indicator PMI.

25. The method according to claim 20 or 22, wherein for a $j^{th}$ layer of the second transmit signal, wherein j is a positive integer in an interval of [S+1, L], in step 2, calculating an average value of the $j^{th}$ layer of the second transmit signal and a variance of the $j^{th}$ layer of the second transmit signal according to a probability set corresponding to a first type of unknown demodulation parameter of the $j^{th}$ layer of the second transmit signal comprises:

obtaining a first average value of the $j^{th}$ layer of the second transmit signal and a variance of the $j^{th}$ layer of the second transmit signal that are corresponding to each of multiple values in a preset value set of the first type of unknown demodulation parameter of the $j^{th}$ layer of the second transmit signal, to obtain a first average value set and a first variance set; and
calculating the average value of the $j^{th}$ layer of the second transmit signal and the variance of the $j^{th}$ layer of the second transmit signal according to a preset rule, the probability set corresponding to the first type of unknown demodulation parameter of the $j^{th}$ layer of the second transmit signal, the first average value set, and the first variance set.

26. The method according to claim 21 or 22, wherein for a $j^{th}$ layer of the second transmit signal, wherein j is a positive integer in an interval of [S+1, L], in step 2, calculating a variance of a $j^{th}$ layer of the second equivalent transmit signal according to a probability set corresponding to a second type of unknown demodulation parameter of the $j^{th}$ layer of the second transmit signal comprises:

obtaining, according to a variance of the $j^{th}$ layer of the second transmit signal, a second variance that is of the $j^{th}$ layer of the second equivalent transmit signal and that is corresponding to each of multiple values in a preset value set of the second type of unknown demodulation parameter of the $j^{th}$ layer of the second transmit signal, to obtain a second variance set; and

calculating the variance of the j$^{th}$ layer of the second equivalent transmit signal according to a preset rule, the probability set corresponding to the second type of unknown demodulation parameter of the j$^{th}$ layer of the second transmit signal, and the second variance set.

27. The method according to claim 25, wherein the obtaining a first average value of the j$^{th}$ layer of the second transmit signal and a first variance of the j$^{th}$ layer of the second transmit signal that are corresponding to each of multiple values in a preset value set of the unknown demodulation parameter of the j$^{th}$ layer of the second transmit signal, to obtain a first average value set and a first variance set comprises:

calculating, according to an LLR that is corresponding to the j$^{th}$ layer of the second transmit signal and that is obtained by means of calculation in a previous iteration process, the first average value of the j$^{th}$ layer of the second transmit signal and the first variance of the j$^{th}$ layer of the second transmit signal that are corresponding to each of the multiple values in the preset value set of the first type of unknown demodulation parameter of the j$^{th}$ layer of the second transmit signal, to obtain the first average value set and the first variance set.

28. The method according to claim 25, wherein the calculating the average value of the j$^{th}$ layer of the second transmit signal according to a preset rule, the probability set corresponding to the first type of unknown demodulation parameter of the j$^{th}$ layer of the second transmit signal, and the first average value set comprises:

calculating a weighted average value of multiple elements in the first average value set according to formula 1 and the probability set corresponding to the first type of unknown demodulation parameter of the j$^{th}$ layer of the second transmit signal, to obtain the average value of the j$^{th}$ layer of the second transmit signal, wherein formula 1 is represented as follows:

$$\mathrm{E}\left(x_j\right) = \sum_{t=1}^{m} \mathrm{E}_t p_t,$$

wherein
E($x_j$) indicates the average value of the j$^{th}$ layer of the second transmit signal, m indicates a quantity of values in the preset value set of the first type of unknown demodulation parameter of the j$^{th}$ layer of the second transmit signal, m is a positive integer, t is a positive integer in an interval of [1, m], E$_t$ indicates an element that is in the first average value set and that is corresponding to a t$^{th}$ value in the preset value set, and $p_t$ indicates an element that is in the probability set and that is corresponding to the t$^{th}$ value in the preset value set.

29. The method according to claim 25, wherein the calculating the variance of the j$^{th}$ layer of the second transmit signal according to a preset rule, the probability set corresponding to the first type of unknown demodulation parameter of the j$^{th}$ layer of the second transmit signal, and the first variance set comprises:

calculating a weighted average value of multiple elements in the first variance set according to formula 2 and the probability set corresponding to the first type of unknown demodulation parameter of the j$^{th}$ layer of the second transmit signal, to obtain the variance of the j$^{th}$ layer of the second transmit signal, wherein formula 2 is represented as follows:

$$\mathrm{V}\left(x_j\right) = \sum_{t=1}^{m} \mathrm{V}_t p_t,$$

wherein
v($x_j$) indicates the variance of the j$^{th}$ layer of the second transmit signal, m indicates a quantity of values in the preset value set of the first type of unknown demodulation parameter of the j$^{th}$ layer of the second transmit signal, m is a positive integer, t is a positive integer in an interval of [1, m], V$_t$ indicates an element that is in the first variance set and that is corresponding to a t$^{th}$ value in the preset value set, and $p_t$ indicates an element that is in the probability set and that is corresponding to the t$^{th}$ value in the preset value set.

30. The method according to claim 25, wherein the calculating the variance of the j$^{th}$ layer of the second transmit signal according to a preset rule, a probability set corresponding to the unknown demodulation parameter of the j$^{th}$ layer of the second transmit signal, and the first variance set comprises:

calculating the variance of the j$^{th}$ layer of the second transmit signal according to the probability set corresponding to the unknown demodulation parameter of the j$^{th}$ layer of the second transmit signal, the first variance set, and formula 3, wherein

formula 3 is represented as follows:

$$V\left(x_j\right) = \sum_{t=1}^{m} V_t p_t + \sum_{t=1}^{m} p_t E_t^2 - \left(\sum_{t=1}^{m} p_t E_t\right)^2$$

$$= \sum_{t=1}^{m} V_t p_t + \sum_{t=1}^{m} p_t E_t^2 - \left(E\left(x_j\right)\right)^2 ,$$

wherein

$v(x_j)$ indicates the variance of the j$^{th}$ layer of the second transmit signal, m indicates a quantity of values in the preset value set of the first type of unknown demodulation parameter of the j$^{th}$ layer of the second transmit signal, m is a positive integer, t is a positive integer in an interval of [1, m], $V_t$ indicates an element that is in the first variance set and that is corresponding to a t$^{th}$ value in the preset value set, $p_t$ indicates an element that is in the probability set and that is corresponding to the t$^{th}$ value in the preset value set, $E_t$ indicates an element that is in the first average value set and that is corresponding to the t$^{th}$ value in the preset value set, and $E(x_j)$ indicates the average value of the j$^{th}$ layer of the second transmit signal.

31. The method according to claim 26, wherein the calculating the variance of the j$^{th}$ layer of the second equivalent transmit signal according to a preset rule, the probability set corresponding to the second type of unknown demodulation parameter of the j$^{th}$ layer of the second transmit signal, and the second variance set comprises:

calculating a weighted average value of multiple elements in the second variance set according to formula 4 and the probability set corresponding to the second type of unknown demodulation parameter of the j$^{th}$ layer of the second transmit signal, to obtain the variance of the j$^{th}$ layer of the second equivalent transmit signal, wherein

formula 4 is represented as follows:

$$V\left(X_j\right) = \sum_{w=1}^{n} V_w p_w ,$$

wherein

$V(X_j)$ indicates the variance of the j$^{th}$ layer of the second equivalent transmit signal, n indicates a quantity of values in the preset value set of the second type of unknown demodulation parameter of the j$^{th}$ layer of the second transmit signal, n is a positive integer, w is a positive integer in an interval of [1, n], $V_w$ indicates an element that is in the first variance set and that is corresponding to a w$^{th}$ value in the preset value set, and $p_w$ indicates an element that is in the probability set and that is corresponding to the w$^{th}$ value in the preset value set.

32. The method according to claim 26, wherein the calculating the variance of the j$^{th}$ layer of the second equivalent transmit signal according to a preset rule, the probability set corresponding to the second type of unknown demodulation parameter of the j$^{th}$ layer of the second transmit signal, and the second variance set comprises:

calculating the variance of the j$^{th}$ layer of the second equivalent transmit signal according to the probability set corresponding to the second type of unknown demodulation parameter of the j$^{th}$ layer of the second transmit signal, the second variance set, and formula 5, wherein

formula 5 is represented as follows:

$$V\left(X_j\right)=\sum_{w=1}^{n}V_w p_w+\sum_{w=1}^{n}p_w E_w^2-\left(\sum_{w=1}^{n}p_w E_w\right)^2$$

$$=\sum_{w=1}^{n}V_w p_w+\sum_{w=1}^{n}p_w E_w^2-\left(E\left(X_j\right)\right)^2 \quad,$$

wherein
$V(X_j)$ indicates the variance of the $j^{th}$ layer of the second equivalent transmit signal, n indicates a quantity of values in the preset value set of the second type of unknown demodulation parameter of the $j^{th}$ layer of the second transmit signal, n is a positive integer, w is a positive integer in an interval of [1, n], $V_w$ indicates an element that is in the second variance set and that is corresponding to a $w^{th}$ value in the preset value set, $p_w$ indicates an element that is in the probability set and that is corresponding to the $w^{th}$ value in the preset value set, $E_t$ indicates a second average value that is of the $j^{th}$ layer of the second equivalent transmit signal and that is corresponding to the $w^{th}$ value in the preset value set, and $E(X_j)$ indicates an average value of the $j^{th}$ layer of the second equivalent transmit signal.

Received signal

```
┌─────────────────────┐
│ Serving cell channel │
│    estimation        │
└─────────────────────┘

┌─────────────────────┐
│  Interference cell   │
│ channel estimation   │
└─────────────────────┘
```

Estimation of an unknown demodulation parameter of a second transmit signal

SLIC detection

LLR

Decoding

FIG. 1

FIG. 2

RE

FIG. 3

Received signal

Serving cell channel estimation

Interference cell channel estimation

Probability estimation of an unknown demodulation parameter of a second transmit signal

Improved SLIC detection

LLR

Decoding

FIG. 4

```
                                                              10
        ┌──────────────────────────────────────────┐
        │  Terminal                                 │
        │   ┌────────────────────────────────────┐  │    11
        │   │  Probability set obtaining circuit │  │
        │   └────────────────────────────────────┘  │
        │                  │                         │
        │   ┌────────────────────────────────────┐  │    12
        │   │  SLIC detection circuit            │  │
        │   └────────────────────────────────────┘  │
        │                  │                         │
        │   ┌────────────────────────────────────┐  │    13
        │   │  Decoding circuit                  │  │
        │   └────────────────────────────────────┘  │
        └──────────────────────────────────────────┘
```

FIG. 5

A terminal obtains, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal — 101

The terminal calculates at least one of an average value of each layer of the second transmit signal, a variance of each layer of the second transmit signal, or a variance of each layer of the second equivalent transmit signal according to the probability set corresponding to the unknown demodulation parameter of each layer of the second transmit signal, where the second equivalent transmit signal is a signal obtained after the second transmit signal is precoded — 102

The terminal calculates, according to the at least one of the average value of each layer of the second transmit signal, the variance of each layer of the second transmit signal, or the variance of each layer of the second equivalent transmit signal, a log-likelihood ratio LLR corresponding to each layer of the transmit signal — 103

The terminal performs decoding according to the LLR corresponding to each layer of the first transmit signal in the transmit signal, to obtain the first transmit signal — 104

FIG. 6

A terminal obtains, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal — 201

The terminal obtains a first average value of a $j^{th}$ layer of the second transmit signal and a variance of the $j^{th}$ layer of the second transmit signal that are corresponding to each of multiple values in a preset value set of a first type of unknown demodulation parameter of the $j^{th}$ layer of the second transmit signal, to obtain a first average value set and a first variance set — 202

The terminal calculates an average value of the $j^{th}$ layer of the second transmit signal and a variance of the $j^{th}$ layer of the second transmit signal according to a preset rule, a probability set corresponding to the first type of unknown demodulation parameter of the $j^{th}$ layer of the second transmit signal, the first average value set, and the first variance set — 203

The terminal calculates a log-likelihood ratio LLR corresponding to each layer of the transmit signal according to an average value of each layer of the second transmit signal and a variance of each layer of the second transmit signal — 204

The terminal determines whether a quantity of iteration times is greater than or equal to a preset quantity threshold — 205

Add 1 to the quantity of iteration times

No

Yes

The terminal performs decoding according to the LLR corresponding to each layer of the first transmit signal in the transmit signal, to obtain the first transmit signal — 206

FIG. 7

Calculate at least one of an average value of each layer of a second transmit signal, a variance of each layer of the second transmit signal, or a variance of each layer of the second transmit signal

Calculate LLR

Whether a quantity of iteration times is greater than or equal to a preset quantity threshold

No

Yes

End

FIG. 8

A terminal obtains, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal — 301

The terminal obtains, according to a variance of a $j^{th}$ layer of the second transmit signal, a second variance that is of a $j^{th}$ layer of a second equivalent transmit signal and that is corresponding to each of multiple values in a preset value set of a second type of unknown demodulation parameter of the $j^{th}$ layer of the second transmit signal, to obtain a second variance set, where the second equivalent transmit signal is a signal obtained after the second transmit signal is precoded — 302

The terminal calculates a variance of the $j^{th}$ layer of the second equivalent transmit signal according to a preset rule, a probability set corresponding to the second type of unknown demodulation parameter of the $j^{th}$ layer of the second transmit signal, and the second variance set — 303

The terminal calculates a log-likelihood ratio LLR of each layer of the transmit signal according to a variance of each layer of the second equivalent transmit signal — 304

The terminal determines whether a quantity of iteration times is greater than or equal to a preset quantity threshold — 305

Add 1 to the quantity of iteration times

No

Yes

The terminal performs decoding according to the LLR corresponding to each layer of the first transmit signal in the transmit signal, to obtain the first transmit signal — 306

FIG. 9

A terminal obtains, according to a received signal and a channel parameter, a probability set corresponding to an unknown demodulation parameter of each layer of a second transmit signal, where a transmit signal corresponding to the received signal includes [1, S] layers of a first transmit signal sent by a serving cell and [S+1, L] layers of the second transmit signal sent by an interference cell, S and L are positive integers, S is smaller than L, and the probability set includes a probability corresponding to each of multiple values in a preset value set of the unknown demodulation parameter of each layer of the second transmit signal — 401

↓

The terminal obtains a first average value of a $j^{th}$ layer of the second transmit signal and a variance of the $j^{th}$ layer of the second transmit signal that are corresponding to each of multiple values in a preset value set of a first type of unknown demodulation parameter of the $j^{th}$ layer of the second transmit signal, to obtain a first average value set and a first variance set — 402

↓

The terminal calculates an average value of the $j^{th}$ layer of the second transmit signal and a variance of the $j^{th}$ layer of the second transmit signal according to a preset rule, a probability set corresponding to the first type of unknown demodulation parameter of the $j^{th}$ layer of the second transmit signal, the first average value set, and the first variance set — 403

↓

The terminal obtains, according to a variance of the $j^{th}$ layer of the second transmit signal, a second variance that is of a $j^{th}$ layer of a second equivalent transmit signal and that is corresponding to each of multiple values in a preset value set of a second type of unknown demodulation parameter of the $j^{th}$ layer of the second transmit signal, to obtain a second variance set, where the second equivalent transmit signal is a signal obtained after the second transmit signal is precoded — 404

TO
FIG. 10B

TO
FIG. 10B

FIG. 10A

The terminal calculates a variance of the $j^{th}$ layer of the second equivalent transmit signal according to a preset rule, a probability set corresponding to the second type of unknown demodulation parameter of the $j^{th}$ layer of the second transmit signal, and the second variance set — 405

The terminal calculates a log-likelihood ration LLR of each layer of the transmit signal according to an average value of each layer of the second transmit signal and a variance of each layer of the second transmit signal — 406

The terminal determines whether a quantity of iteration times is greater than or equal to a preset quantity threshold — 407

Add 1 to the quantity of iteration times

No

Yes

The terminal performs decoding according to the LLR corresponding to each layer of the first transmit signal in the transmit signal, to obtain the first transmit signal — 408

FIG. 10B

# INTERNATIONAL SEARCH REPORT

| | International application No. |
|---|---|
| | PCT/CN2015/090315 |

**A. CLASSIFICATION OF SUBJECT MATTER**

H04L 25/08 (2006.01) i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT; CNKI; WPI; EPODOC; IEEE; 3GPP: SLIC, LLR, pre-coder matrix, PMI, symbol level interference cancellation, log-likelihood ratio, parameter, Pre-coder Matrix Indicator, probability, mean value, variance

**C. DOCUMENTS CONSIDERED TO BE RELEVANT**

| Category* | Citation of document, with indication, where appropriate, of the relevant passages | Relevant to claim No. |
|---|---|---|
| X | CN 104243377 A (HUAWEI TECHNOLOGIES CO., LTD.), 24 December 2014 (24.12.2014), description, paragraphs [0018]-[0124] | 1-32 |
| A | CN 103999389 A (QUALCOMM INC.), 20 August 2014 (20.08.2014), the whole document | 1-32 |
| A | US 2014307569 A1 (QUALCOMM INCORPORATED), 16 October 2014 (16.10.2014), the whole document | 1-32 |
| A | MOROZOV, G. et al., "Decoding-Aided Parameter Estimation for Interference Cancellation and Suppression Receivers in LTE-Advanced Systems", 2015 IEEE 81ST VEHICULAR TECHNOLOGY CONFERENCE(VTC SPRING), 14 May 2015 (14.05.2015) ISSN: 1550-2252, the whole document | 1-32 |
| A | 3GPP, "Study on Network-Assisted Interference Cancellation and Suppression (NAIC) for LTE", 3GPP TR 36.866 V12.0.1(2014-03), 31 March 2014 (31.03.2014), the whole document | 1-32 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 May 2016 (05.05.2016) | **14 June 2016 (14.06.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YAN, Yue** Telephone No.: (86-10) **010-62413472** |
|---|---|

Form PCT/ISA/210 (second sheet) (July 2009)

## INTERNATIONAL SEARCH REPORT
### Information on patent family members

| International application No. |
| --- |
| **PCT/CN2015/090315** |

| Patent Documents referred in the Report | Publication Date | Patent Family | Publication Date |
| --- | --- | --- | --- |
| CN 104243377 A | 24 December 2014 | WO 2016034051 A1 | 10 March 2016 |
| CN 103999389 A | 20 August 2014 | EP 2774292 A1 | 10 September 2014 |
| | | KR 20140099263 A | 11 August 2014 |
| | | WO 2013066399 A1 | 10 May 2013 |
| | | US 2013114437 A1 | 09 May 2013 |
| | | JP 2015501622 A | 15 January 2015 |
| | | US 2014098773 A1 | 10 April 2014 |
| | | IN 3350CHENP2014 A | 03 July 2015 |
| US 2014307569 A1 | 16 October 2014 | WO 2014168863 A2 | 16 October 2014 |
| | | KR 20150143632 A | 23 December 2015 |
| | | CN 105122702 A | 02 December 2015 |
| | | EP 2984774 A2 | 17 February 2016 |

Form PCT/ISA/210 (patent family annex) (July 2009)